(19) Europäisches Patentamt
European Patent Office
Office européen des brevets

(11) **EP 3 624 065 A1**

(12) **EUROPEAN PATENT APPLICATION**

(43) Date of publication:
**18.03.2020 Bulletin 2020/12**

(51) Int Cl.:
***G06T 19/00*** *(2011.01)*

(21) Application number: **18193909.1**

(22) Date of filing: **12.09.2018**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **British Telecommunications public
limited company
London EC1A 7AJ (GB)**

(72) Inventor: **The designation of the inventor has not
yet been filed**

(74) Representative: **British Telecommunications
public limited company
Intellectual Property Department
Ground Floor, Faraday Building
1 Knightrider Street
London EC4V 5BT (GB)**

(54) **CLASSIFICATION OF KNOWLEDGE MANAGEMENT ASSETS**

(57)     A computer implemented method of classifying a plurality of media assets for subsequent retrieval by a knowledge management system (KMS), the method comprising: accessing, for each asset, metadata associated with the asset, the metadata expressing characteristics of the asset and/or a content of the asset; classifying each asset based on the accessed metadata for the asset using a fuzzy logic classifier to generate a fuzzy classification as an n-tuple for the asset, wherein assets are classified into a set of dynamically defined classes, the classes being defined based on features of assets extracted from the asset metadata, such that the addition and/or removal of assets leads to a redefinition of the classes in the set, and wherein the n-tuple for an asset has a plurality of elements in which each element indicates one or more most relevant suitable classes of the classification for the asset.

## FIGURE 2

**Description**

The present invention relates to classification. In particular it relates to classification of knowledge management assets.

Knowledge management servers provide knowledge assets such as media, files, documents, objects, audio, video and the like according to requirements. Those requirements can be explicitly stated or can be expressed implicitly through, for example, a context of a requester. Similarly, the relevance of a knowledge asset an be implicit through attributes, context and other features of the asset. Accordingly, it is desirable to classify knowledge assets to provide effective identification of assets for knowledge management server requests.

The present invention accordingly provides, in a first aspect, a computer implemented method of classifying a plurality of media assets for subsequent retrieval by a knowledge management system (KMS), the method comprising: accessing, for each asset, metadata associated with the asset, the metadata expressing characteristics of the asset and/or a content of the asset; classifying each asset based on the accessed metadata for the asset using a fuzzy logic classifier to generate a fuzzy classification as an n-tuple for the asset, wherein assets are classified into a set of dynamically defined classes, the classes being defined based on features of assets extracted from the asset metadata, such that the addition and/or removal of assets leads to a redefinition of the classes in the set, and wherein the n-tuple for an asset has a plurality of elements in which each element indicates one or more most relevant suitable classes of the classification for the asset.

Preferably the method further comprises the KMS receiving a request for one or more media assets, the request having associated metadata characterising a context of the request; and classifying the request based on the metadata to identify a class of assets suitable for responding to the request; and selecting one or more assets in the identified class for use in responding to the request.

Preferably the media assets include one or more of: textual assets; video assets; audio assets; internet links; and assets suitable for rendering or representing in a virtual reality (VR) system.

Preferably the request originates from a requester including a client computer system communicatively connected to a virtual reality output (VR) device for use by an operator, and further wherein a server is provided as a remote access system (RAS) for providing knowledge assets as media assets to the client via the KMS, wherein the request metadata includes context information comprising one or more of: a location of the operator; a technical environment of the operator; a device, appliance or system accessed by, visible to or engageable with the operator; and environmental parameters of an environment in which the operator is located, and wherein the one or more assets selected for response to the request includes at least one asset renderable in the VR environment for informing the operator of an operation in respect of the context.

Preferably the assets include one or more mixed reality (MR) assets.

Preferably the assets include one or more augmented reality (AR) assets.

The present invention accordingly provides, in a second aspect, a computer system including a processor and memory storing computer program code for performing the steps of the method set out above.

The present invention accordingly provides, in a third aspect, a computer program element comprising computer program code to, when loaded into a computer system and executed thereon, cause the computer to perform the steps of the method set out above.

Embodiments of the present invention will now be described, by way of example only, with reference to the accompanying drawings, in which:

Figure 1 is a block diagram a computer system suitable for the operation of embodiments of the present invention;

Figure 2 is a component diagram of an arrangement according to embodiments of the present invention;

Figure 3 is a component diagram of a system according to embodiments of the present invention;

Figure 4 is a flowchart of a method according to embodiments of the present invention;

Figures 5A to 5D collectively depict a matrix resulting from an extraction process according to embodiments of the present invention;

Figures 6A to 6D collectively illustrate relationships arising from a process according to embodiments of the present invention;

Figure 7 illustrates membership functions for a fuzzy logic classifier in accordance with embodiments of the present invention;

Figure 8 is a component diagram of a process according to embodiments of the present invention; and

Figure 9 depicts values and corresponding fuzzifications according to an exemplary embodiment of the present invention.

The increasing complexity of tasks and specialised equipment in different industries, such as aeronautic, automobile, manufacturing and telecommunications industries have triggered the need of trained specialists and workforce to perform daily activities. Training specialized workers represents a considerable overhead in any business. As an example, it takes as much as 2000 hours for aeronautic inspectors to complete their training (M. Hincapié, A. Caponio, H. Rios and E. Gonzalez Mendívil, "An introduction to Augmented Reality with applications in aeronautical maintenance" in 13th International Conference on Transparent Optical Networks (ICTON), pp. 1-4, Stockholm, 2011). In addition, the increasing complexity of services in network and number of variants in underlying technologies is complicating the process of ensuring that a workforce is up-to-date and knowledgeable on relevant technology and products involved in services. Knowledge needs to be distributed over all the actors of a workforce community as well as documentation supports.

The use of Virtual Reality (VR) technologies can potentially enhance working environments by removing restrictions of time and location and offer much faster knowledge transfer and a better understanding of different processes. VR refers to a highly-interactive computer-generated environments which creates a synthetic experience for a user, allowing the user to have a sense of being present in an environment with data received produced by a computer.

A type of VR is Mixed Reality (MR) where real and virtual worlds are merged. Specifically, MR can be defined as the spectrum that connects the physical world to the virtual world allowing the co-existence of physical and computer-generated elements in real-time. Thus, a Mixed Reality object (MRO) can be defined as a combination of any type of virtual elements and data linked to an element within the physical world. This could include: (MRO1) data from physical objects, people, locations within a physical environment whose state over time is tracked by means of equipment such as sensors; (MRO2) virtual content including (but not limited to) 3D models, multimedia elements (e.g. videos, images, music, sound, voice, etc.) or text.

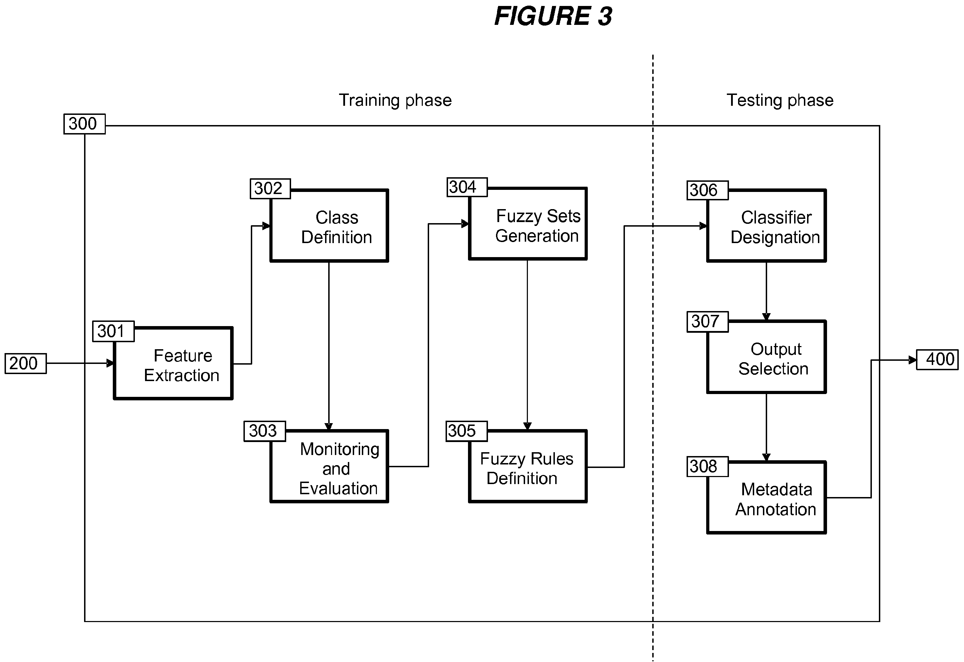

Milgram and Kishino proposed a continuum to represent the different degrees between reality and virtuality (P. Milgram and F. Kishino, "A taxonomy of virtual reality displays" IEICE TRANSACTIONS on Information and Systems, Vols. E77-D, no. 12, pp. 1321-1329, 1994; etclab.mie.utoronto.ca/people/paul_dir/IEICE94/ieice.html). Lifton shows complex MR possible mappings between real and virtual environments including space, time, objects and people, resulting in a MR object (Lifton, J. H. (2007) Dual Reality: An Emerging Medium. Massachusetts Institute of Technology. PhD Thesis, specifically Figure 3-5).

MR systems have become more used in professional and industrial environments due to the increasing growth of mobile devices. In addition, the use of ubiquitous computing as an infrastructure for mixed reality has opened the possibility of having it pervasively in daily lives, allowing collaboration between users in different geographical locations. A myriad of handheld devices, such as smartphones and tablets, integrate cameras and sensors (e.g. accelerometers, gyroscopes, compasses, GPS, etc.), that can easily be turned into MR systems. Head mounted displays (HMD) (e.g. AR glasses) can provide similar sensing capabilities with a higher level of immersion for the user.

MR solutions have been used to support workers in their activities in different industries such as textile, aeronautics, medical care, manufactory, military, and architectural construction. Another possible application for MR is in customer service where customers, instead of waiting next to the phone to receive instructions when setting up technology at home, or waiting for a visit of an engineer to do configuration or installation, could use their mobile devices and overlay instructions through the camera in real-time, with a technician guiding him/her through the process. The same scenario could be applied for technicians and engineers with different levels of training and expertise. In this case, a young trainee could benefit from the remote guidance and help available from a more experienced engineer.

Embodiments of the present invention address certain functions of MR immersive Remote Assistant Systems (RAS) to provide applications for remote workforce assistance. The RAS produces real-time support and training to engineers via immersive technologies. It provides enrichment to employees' perception about their environment and it allows connectivity between employees from different geographical locations to a library of Knowledge Assets (KA) as well as with highly skilled employees who can provide expert solutions and instructions if necessary. It enables remote support and training of employees on a job in various tasks, managing uncertainty in real environments and facilitating active learning situations. The RAS's is assumed to carry out three main functions: 1) Real-time support enabling communications among employees; 2) Knowledge management of KA media from their capture to annotation, classification, personalisation, and delivery; and 3) Intelligent Assistance enabling more advanced personalised workforce assistance.

Embodiments of the present invention provide mechanisms for classifying metadata to Knowledge Assets (KA) processed within a RAS Knowledge Management System (KMS). The RAS provides remote workforce assistance with Mixed-Reality immersive training and support, encompassing the following three functions:

1. Real-time support: based on MR technology, enabling video calls between employees realising real-time assistance with views from one engineer to another ("you see what I see" (YSWIS)) plus additional information such as current location, and task information. Video streaming providing real-time view from one engineer to another could be done via a shared camera view feed taken from a head-mounted device (HMD) or a wearable camera (e.g. mobile phone's camera). Additionally, Global Positioning System (GPS) and Inertia Measuring Unit (IMU) sensors in the HMD and/or mobile phone(s) can provide real-time location, orientation and vantage of an engineer to assist experts and a KMS identify relevant solutions and instructions.

2. Knowledge Management: performed by the KMS to enable users to capture Mixed-reality Knowledge Assets (KA) which later can be accessed for training and auditing purposes. The KMS assists the KA journey through capture of basic knowledge to delivery to the employee, by converting it into usable and retrievable knowledge. For example, KAs can include, inter alia: images, videos, documents, textual descriptions, audio, annotations, indications and any combinations of the foregoing . Following KA capture, a KMS performs annotation of KA, classification using embedded metadata, personalisation to provide employees access to relevant KA and content delivery selecting non-intrusive KA delivery modality. Embodiments of the present invention are concerned with the annotations of KAs for the classification to aid identification, retrieval and/or delivery of appropriate KA in use.

3. Intelligent Assistance: performed by an Intelligent Assistant (IS) enabling personalised stand-alone assistance for tasks using MR leveraging both real-time support and knowledge management (1. and 2. functions above). A MR client application can convert KA, identified by the KMS, into a MR scene which provides on-site users with supplementary information when working with specific device/task, with KA delivered as augmented-reality based elements (e.g. instructions, images, video files) or as VR-based elements (e.g. immersive 360 degree video files).

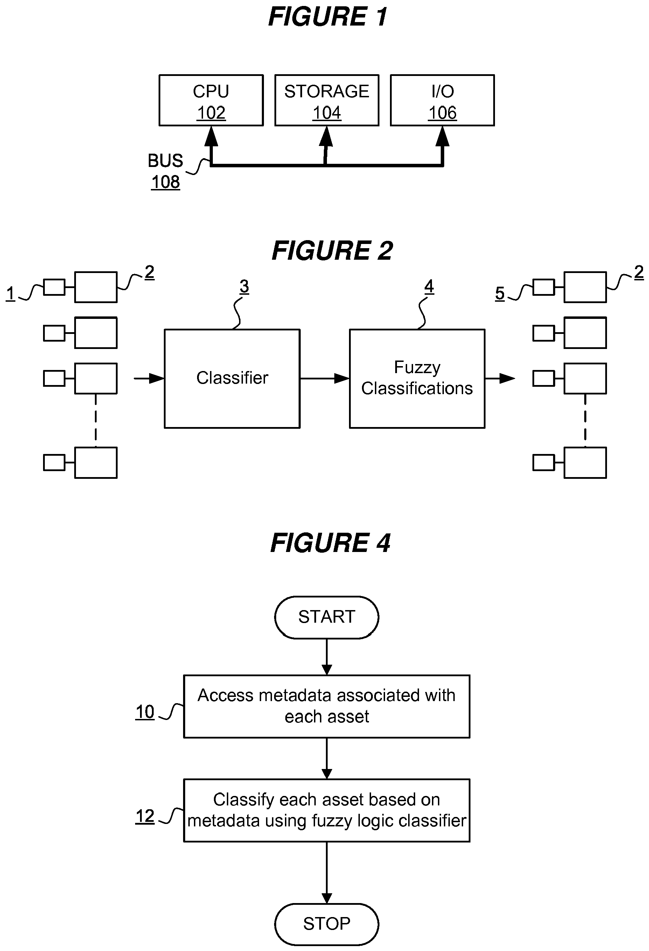

The use of KA metadata enables systems to searches resources, intelligent KA ranking and personalisation of information to be presented to a user. Architecturally the RAS may be instantiated over one or more computer systems such as that depicted in Figure 1. Figure 1 is a block diagram of a computer system suitable for the operation of embodiments of the present invention. A central processor unit (CPU) 102 is communicatively connected to a storage 104 and an input/output (I/O) interface 106 via a data bus 108. The storage 104 can be any read/write storage device such as a random-access memory (RAM) or a non-volatile storage device. An example of a non-volatile storage device includes a disk or tape storage device. The I/O interface 106 is an interface to devices for the input or output of data, or for both input and output of data. Examples of I/O devices connectable to I/O interface 106 include a keyboard, a mouse, a display (such as a monitor) and a network connection.

In embodiments of the present invention the arrangement of one or more computer systems can include:

- An Application Server (AS) responsible for providing signalling and communication orchestration between a users' mobile clients and supporting servers. Additionally, it may host the KMS which can be accessed, for example, via a web application. In support of the KMS, previously annotated KAs can be classified leading to the delivery of content to a user which the AS can expose to mobile clients via web services with language such as Augmented Reality Markup Language (ARML) as is known in the art.
- A "Service Server" (SS) containing service specific information used to generate metadata (e.g. task assigned, user level of expertise, equipment type and manufacturer, inventory) via web services.
- A Media Server (MS) hosting KA media resources and equipped with required technology to, for example, enable video resources delivery, support multiple streaming technologies such as RTSP, HTTP, Web sockets, WebRTC, VoIP, TCP/UDP the cater for different media resources type, and the like.
- Mobile clients (i.e. mobile phones, tablets and HMDs) to run a client application interpreting, for example, ARML-based messages (received from the AS) and integrate them with the information received from the SS to create the AR or VR scene. The client application can support the capture of basic KAs by recording videos, photos and allowing the creation of notes. Captured information is processes by the KMS within the AS and stored within the MS.

The dynamics of typical RAS dynamics begin when, using Mobile Client Application (MCA), an employee/user logs into the RAS which delivers AR Knowledge Asset Information (KAI) stored in the AS (task, equipment) to him/her. Further, upon user request, it can deliver KA from the MS. The AS could take the role of translating recommended resources, both KAI and KA, via - for example - ARML and sending them to MCA which parses the ARML response creating media resources within AR scene based on suggested KAs. If a user requires further support, they can select a particular KA displayed within the AR scene which can trigger associated content delivery from the MS or alternatively may request VR-based or not expert support via real-time support functions. When appropriate, a user may generate KAs by initiating capture of KAs such as video recording, voice note of activity, photograph of equipment, which after the KMS' processing would be stored within the MS.

Embodiments of the present invention provide a fuzzy logic classification mechanism of KAs such as video recordings, audio signals, equipment photos, flow charts, reports and free text notes. Dynamic classes are created and associated with non-fixed rules. Each KA can be associated (classified within) one or more categories to a different degree of membership. The classification result is a value embedded within an n-tuple where each element represents the most relevant suitable categories for the KA to be classified within.

Embodiments of the present invention operate on KAs with embedded metadata (the generation and/or provision of which are beyond the scope of this specification). Regardless of the mechanism employed for metadata annotation, a metadata schema formatted with a JavaScript Object Notation (JSON) syntax may be employed, so as to enable the handling of data as JavaScript objects that also contain a classification result after applying a fuzzy logic classification approach according to embodiments of the present invention. Other embodiments would be possible with formalism that allowed to hold compactly annotations and classification output individually for each KA within the Media server.

Embodiments of the present invention provide for the classification of KAs including:

1. Extracting relevant information from metadata annotation of KAs.

2. Classifying results, by means of fuzzy logic, with the classification process expressed in terms of n-tuple final value.

3. Dynamically handling classification classes, keeping relevant ones active to enable the classification process. This process re-groups existing classes after evaluating their relevance with two objectives: firstly, to keep meaningful classification only; and secondly to add dynamically new classes when needed. The former is achieved by monitoring a number of primary classes. The latter is accomplished by treating differently the case of a new class to the case of removing an irrelevant class (since a new class with low activity could be confused with an irrelevant class being alive for a large time window and vice-versa).

4. Mapping the combination of classes by interpolating linguistic fuzzy terms. This aims to provide transparency in the classification process and is accomplished by a rule association process which takes advantage of the fuzzy logic user-friendly nature by representing human-like modelling in terms of linguistic labels to understand the universe of discourse of any knowledge asset.

Thus, embodiments of the present invention provide for the classification of KAs of potentially different nature (e.g. different types of asset, be they video, audio, text, combination or other) by employing fuzzy logic techniques. In this approach dynamic classes are created and associated with non-fixed rules. This is accomplished by extracting features from the annotated data. These features are then arranged into classes. Therefore, rules volume and their association are constantly evolving while the system is being fed by KAs.

Figure 2 is a component diagram of an arrangement according to embodiments of the present invention. Media assets 2, i.e. KAs, each have associated metadata 1 expressing characteristics of the asset and/or a content of the asset. For example, metadata can include contextual information relating to an applicability of an asset, such as a particular location relevant to the asset, a device or appliance relevant to the asset, a role, job or function of the asset or to which the asset is applicable, a description of the asset, and other attributes as will be apparent to those skilled in the art.

The assets with metadata are classified by a classifier 3. The classifier is a hardware, software, firmware or combination component suitable for undertaking a fuzzy logic classification of the assets 2 based on the metadata 1 as will be described in detail below. The classification is generated as an n-tuple for each asset. Each n-tuple has a plurality of elements in which each element indicates one or more most relevant suitable classes for the asset being classified. Thus, the assets 2 are classified according to fuzzy classifications 4 and the metadata associated with each asset 2 is modified to modified metadata 5 to reflect the classification.

Figure 4 is a flowchart of a method according to embodiments of the present invention. Initially, at step 10, metadata 1 associated with each asset 2 is accessed. Subsequently, at step 12, the classifier 3 classifies each asset based on the metadata using fuzzy logic classifications 4. The method will be described in detail below.

Figure 3 is a component diagram of a system according to embodiments of the present invention. The system architecture depicted in Figure 3 includes the following elements:

a) Feature extraction (301);
b) Class definition (302);
c) Monitoring and evaluation (303);
d) Fuzzy sets generation (304);
e) Fuzzy rules definition (305);
f) Classifier designation (306);
g) Output selection (307) and
h) Metadata annotation (308).

The system of Figure 3 requires an annotated KA input (200) (i.e. with embedded metadata). This metadata can be schematised by open-standard file formats. In an exemplary implementation, JSON syntax is used.

Embodiments of the present invention involve two phases:

1. A training phase in which features are extracted (301), classes are defined (302), fuzzy sets generated (304) and antecedents of the fuzzy rules defined (305).

2. A testing phase where our fuzzy classification model is tested against a given KA. This involves designation of a classifier (306), selection of the final output (307) and addition of the classification results as part of the annotation metadata.

An objective is to enrich KA's basic annotation with classification information. For example, Table 1 depicts an example of annotated metadata, with Table 2 depicting the supplementation of the annotated metadata with classification information (in ***bold italic***)

TABLE 1

```
{
    "_$id": "JPG0000001",
    "assetType": "Image",
    "description": "Patching",
    "jobType": "Repair",
    "jobCategory": "Broadband",
    "domain": "Colchester and Ipswich",
    "skillCode": "UGREP",
    "links": [{
            "noRelational": {
                    "db": "knowledge",
                    "collectionName": "kam",
                    "uri": "provider://server.subDomain.com:port"
            },
            "relational": {
                    "db": "knowledge",
                    "table": "kam",
                    "uri":
                    "driver:provider:version:@database.server.subDomain.domain:port:schema"
            },
            "href": "{+%24id}"
    }],
    "timeStamp": "YYYY-MM-DDTHH:MM:SS.MMMZ",
    "location": {
            "coordinates": [{ "latitude": "00.00000"},
                    { "longitude": "0.00000"}]
    }
}
```

In Table 2 an example of a final result of modified annotated metadata is depicted where 'score = 7.1' describes how well a specific KA fits within a cluster 'class = Skillcode'. Elements within the 'data-class' object are the trace of primary and secondary classes (which we will define in Class Definition (302) process below) that generated that specific similarity score using fuzzy logic rules. The process of obtaining the similarity score value is described within (306).

```
{
    "_$id": "JPG0000001",
    "assetType": "Image",
    "description": "Patching",
    "jobType": "Repair",
    "jobCategory": "Broadband",
    "domain": "Colchester and Ipswich",
    "skillCode": "UGREP",
    "links": [{
            "noRelational": {
                    "db": "knowledge",
                    "collectionName": "kam",
                    "uri": "provider://server.subDomain.com:port"
            },
            "relational": {
                    "db": "knowledge",
                    "table": "kam",
                    "uri":
"driver:provider:version:@database.server.subDomain.domain:port:schema"
            },
            "href": "{+%24id}"
    }],
    "timeStamp": "YYYY-MM-DDTHH:MM:SS.MMMZ",
    "location": {
            "coordinates": [{ "latitude": "00.00000"},
                    { "longitude": "0.00000"}]
    },
    "classification": {
            "totalItems": 2,
            "item1": {
                    "score": 7.1,
                    "class": "SkillCode",
                    "value": "UGREP"
            },
            "item2": {
                    "score": "5.5",
                    "class": "JobCategory",
                    "value": "Broadband"
            }
            "data-class": {
                    "primary": {       "jobType": "Repair",
                            "jobCategory": "BroadBand",
                            "skillCode": "UGREP",
                            "assetType": "Image"
                    },
                    "secondary": {     "description": "Patching",
                            "domain": "ColchesterAndIpswich",
                            "timeLine": "THH:MM:SS.MMMZ"
                    }
            }
    }
}
```

TABLE 2

In some embodimetns the classification method is executed off-line to provide input to real-time usage without processing delays enabling fast personalisation and content delivery.

The Features extraction (301) process takes the form $(x^t; y^t)$ $t=\{1,..,N\}$ where $x^{(t)} \in R^{(n)}$ and $y^{(t)} \in R^{(k)}$. Most of the fuzzy logic systems that extract characteristics from the data describe the influence of the input variables $x = (x_1,...,x_n)^T \in R^n$ on the k output variables $y= (y_1, ...,y_n)^T$ reflecting a direct relationship from input to output data being extracted, having as

- INPUT: a characteristic and its value or set of values
- OUTPUT: the relationship among characteristics

Consequently, embodiments of the invention can formalise rule extraction process in the following form:

$$O_{i_{\{\omega\}}} \rightarrow \begin{bmatrix} (\chi_1 ; \chi_2) & (\chi_1 ; \chi_3) & (\chi_1 ; \chi_k) \\ (\chi_2 ; \chi_1) & (\chi_2 ; \chi_3) & (\chi_2 ; \chi_k) \\ \vdots & \vdots & \vdots \\ (\chi_j ; \chi_1) & (\chi_j ; \chi_2) & (\chi_j ; \chi_k) \end{bmatrix} \tag{1}$$

Where:

- O represents an object with embedded metadata;
- $i$ is the object index;
- $\{\omega\}$ is a characteristic item that contains a set of property labels ($\lambda$) and their corresponding values ($v$) such as: $\{\omega\}$ = $\{\lambda_1 : v_1, ..., \lambda_n : v_n\}$;
- $(\chi_j ; \chi_k)$ is an extracted feature where, if $\Omega$ represents the total number of properties, $\chi_j \neq \chi_k; j = \{1, 2, ..., \Omega\}$ represents the index of first element in the pair; $k = \{1, 2, ..., \Omega\}$ and the index of second element in the pair. Therefore, the resulting matrix (1) contains the extracted features.

Considering an example to demonstrate this construction: assume an annotated KAM. The KAs in the KAM were captured when a network patching job was carried out. After that, the KA was annotated producing an object with embedded metadata which will be used as input for the process described for embodiments of the present invention (300). Table 1 depicts an annotated object from a set of objects where a first element corresponds to this described scenario. For this example, and to reduce complexity, a reduced number of features are being shown in Table 1, however, these features can change depending on the KA used.

By following a feature extraction process (301), a resulting association can be described as depicted in the matrix having a first column containing:

$$\begin{bmatrix} ("assetType": "Image"; "description": "Patching") \\ ("description": "Patching"; "assetType": "Image") \\ \vdots \\ ("annotations": "JSONobject" ; "assetType": "Image") \end{bmatrix}$$

the matrix having a second column containing:

$$\begin{bmatrix} ("assetType": "Image"; "jobType": "Repair") \\ ("description": "Patching" ; "jobType": "Repair") \\ \vdots \\ ("annotations": "JSONobject"; "description": "Patching") \end{bmatrix}$$

and the matrix having a third column containing:

$$\begin{bmatrix} ("assetType": "Image"; "annotations": "JSONobject") \\ ("description": "Patching"; "annotations": "JSONobject") \\ \vdots \\ ("annotations": "JSONobject"; "location": "JSONobject") \end{bmatrix}$$

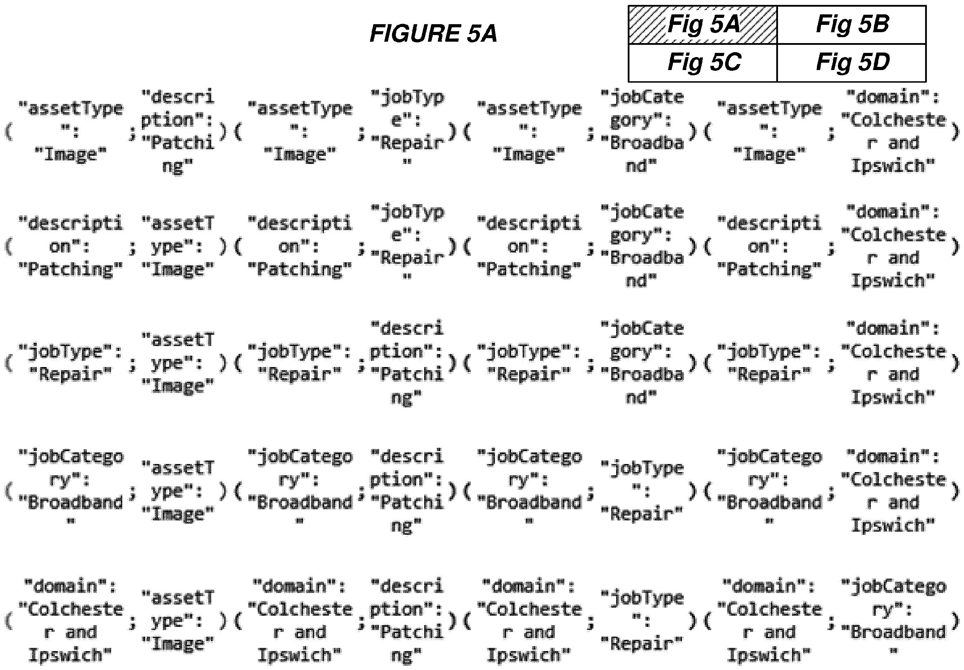

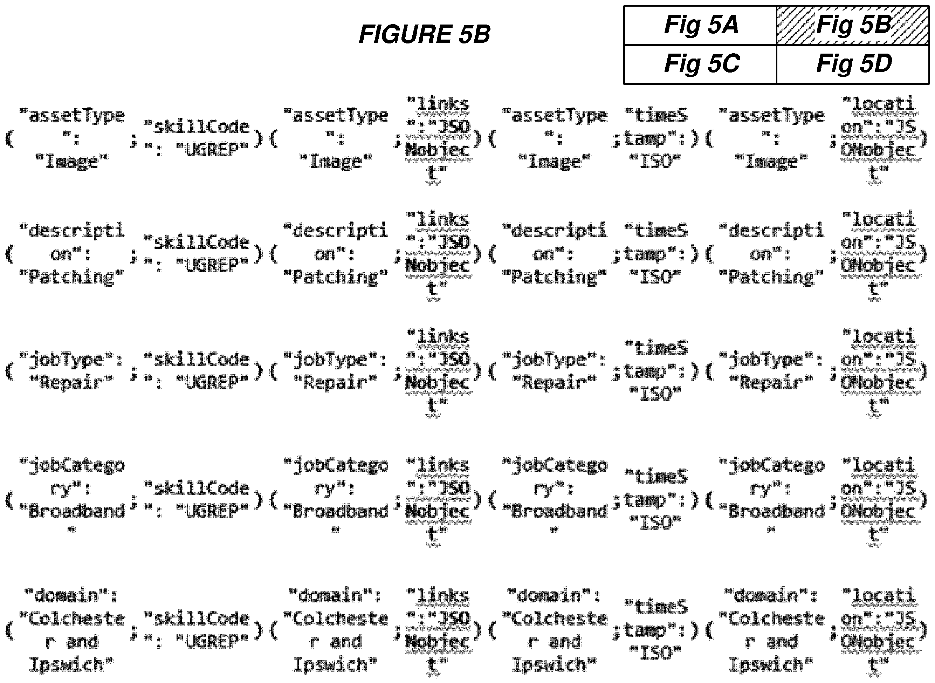

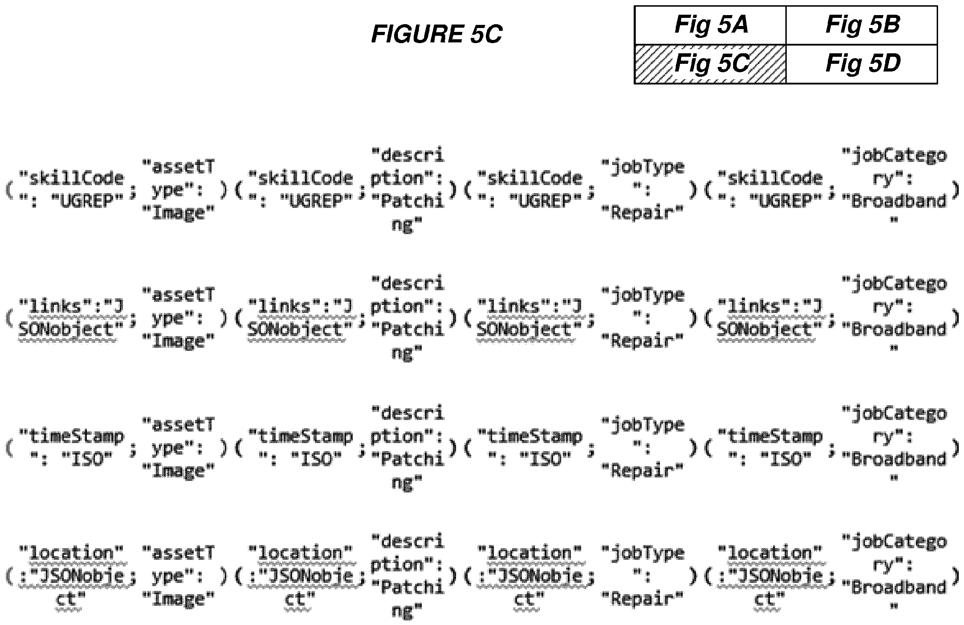

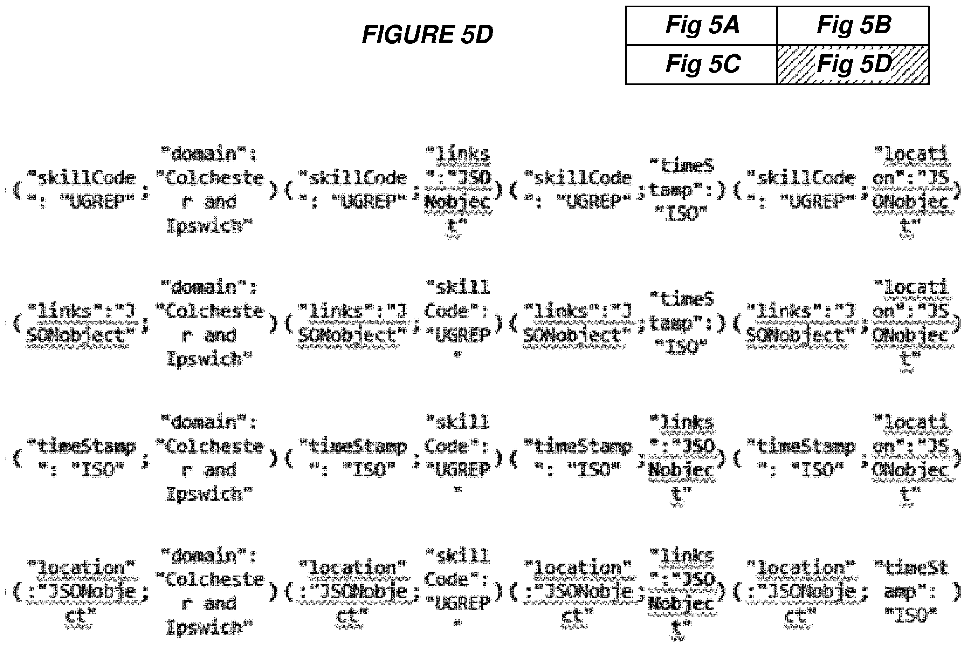

such matrix obtained when $\chi_j \neq \chi_k$ is satisfied. Figures 5A, 5B, 5C and 5D collectively depict a complete matrix resulting from the above extraction. Note that Figures 5A, 5B, 5C and 5D are intended to be viewed together in the configuration indicated on each page of the respective Figures. The Figures 5A to 5D will be referred to collectively as Figure 5. Observe that a "JSONobject" value (see resulting matrix in Figure 5) can be decomposed by employing the same described methodology, as a "JSONobject" is used as a container for other more elementary features. This allows nesting multiple units of information, for example, locations, reference links or detailed extra information among others. This process is executed for each input asset being fed into the system.

According to embodiments of the present invention, a class refers to a set of related properties and/or attributes that allow differentiation of one object from others. To accomplish dynamic creation two sub-processes can be used.

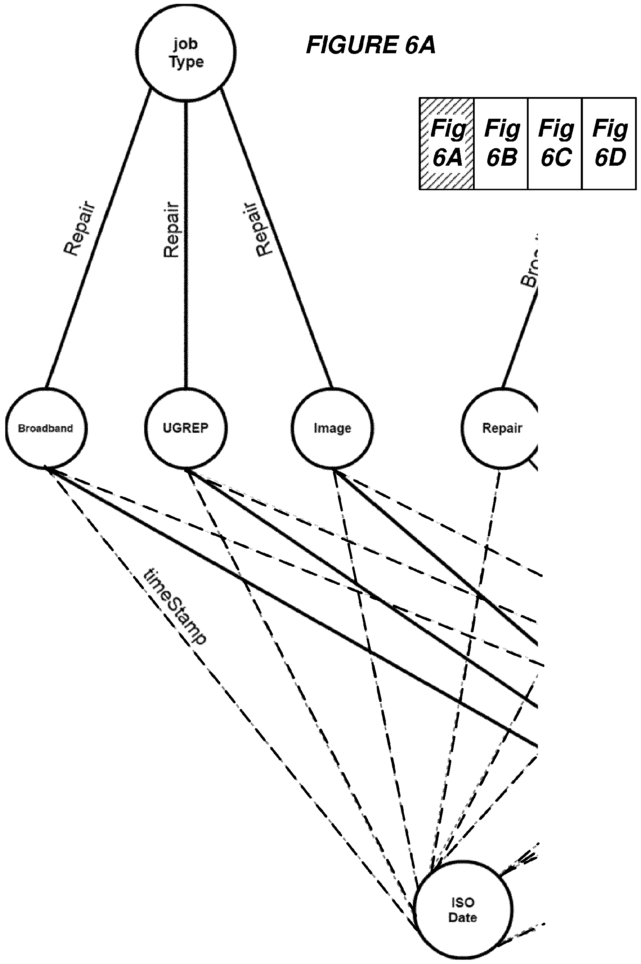

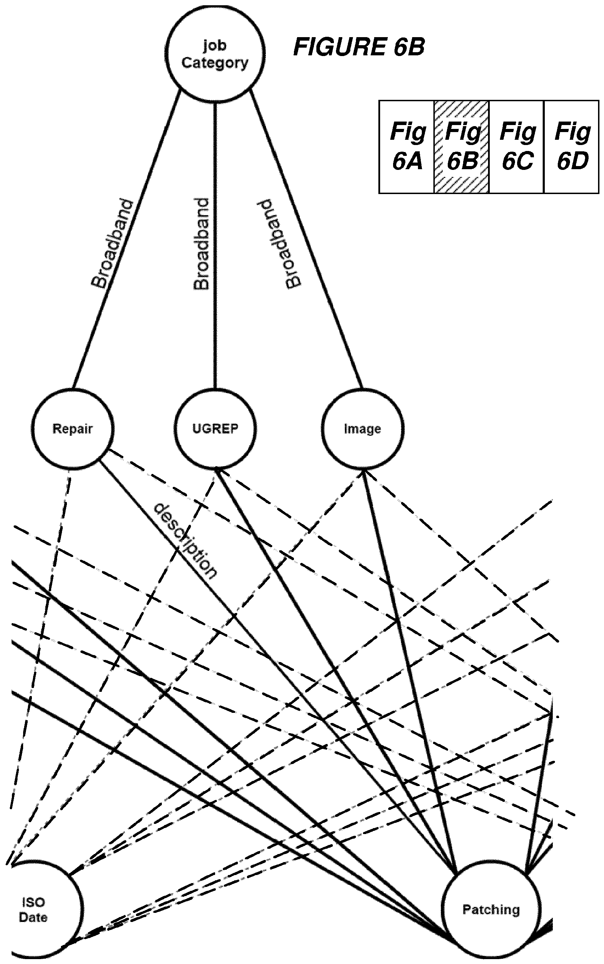

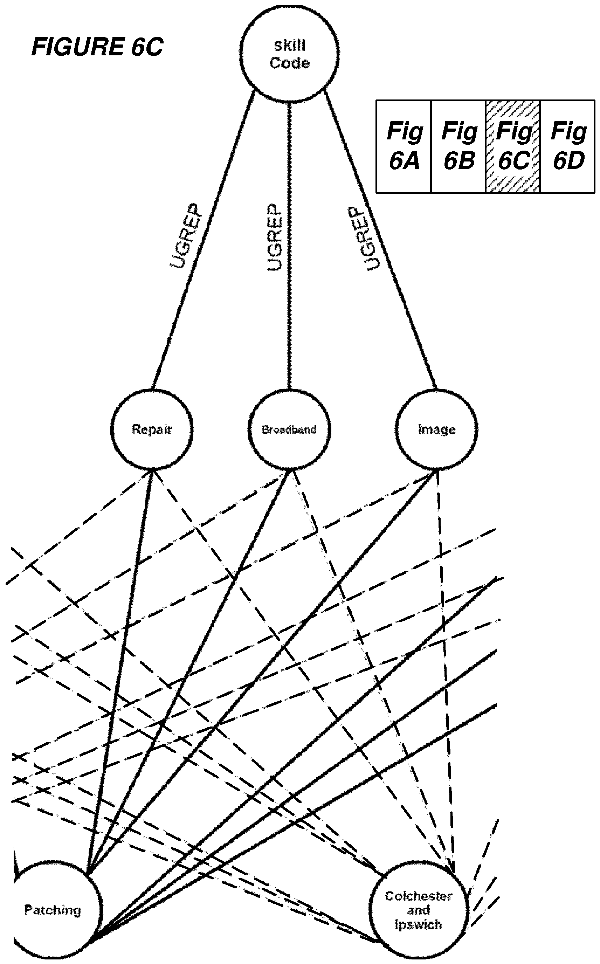

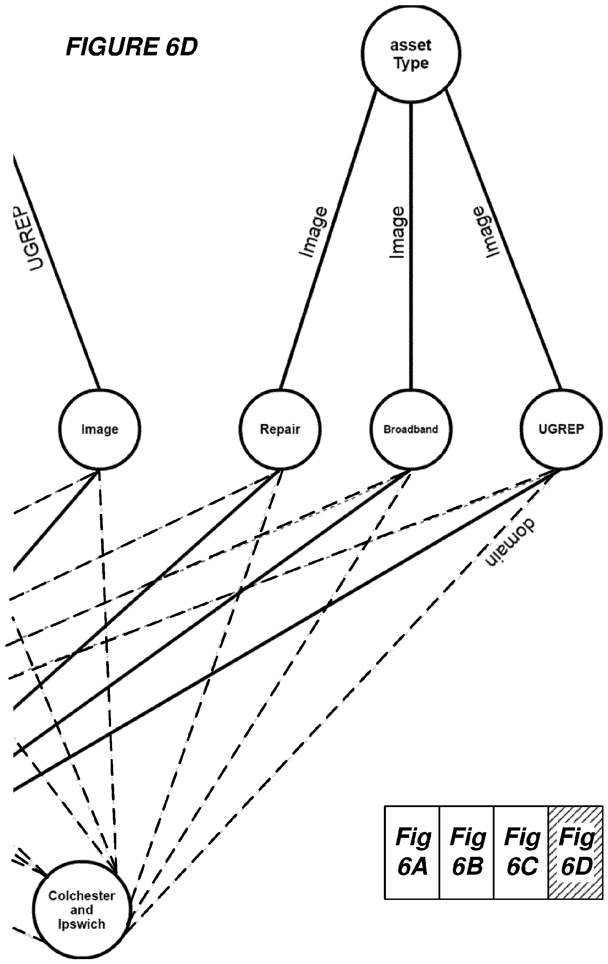

These are class definition (302), and monitoring and evaluation (303). Class definition (302) includes determining a candidate class based in a feature extraction process described with respect to Figure 3 (301). The process seeks to build hierarchical structures which connect extracted features. Figures 6A, 6B, 6C and 6D taken collectively illustrate all the relationships arising from the process of (302). Notably, the Figures 6A to 6D are to be viewed together according to the arrangement indicated in each of these figures, and Figures 6A to 6D will hereafter be collectively referred to as Figure 6. The process 302 can be summarised as:

i. Take matrix described in (301) containing paired extracted features in the form $(\chi_j; \chi_k)$. Each element $\chi$ is integrated by a property label ($\lambda$) and their corresponding value ($v$), i.e. $\chi = (\lambda{:}v)$, (ref. Figure 5).

ii. Combine a set consisting of unique features as follows, for each column m in the input matrix in (301), obtain a pre-candidate $p$ by computing the number of occurrences $f$ of the second element of the pair, this is $\chi_k$. Then store the corresponding feature ($\chi \to \chi_k$) with the less frequent constituent. Such as:

$$p = \{ \chi \mid \min f^t(\chi_k), \dots \}; \quad \forall t \in \{1,2,\dots,m\} \tag{2}$$

In the example matrix of Figure 5, at the first iteration we have:

$$p = \{(\text{"description"}: \text{"Patching"}), (\text{"jobType"}: \text{"Repair"}),$$
$$(\text{"jobCategory"}: \text{"Broadband"}), (\text{"domain"}: \text{"Colchester and Ipswich"}),$$
$$(\text{"skillCode"}: \text{"UGREP"}), (\text{"links"}: \text{"JSONobject"}), (\text{"timeStamp"}: \text{"ISO"}),$$
$$(\text{"location"}: \text{"JSONobject"})\}$$

since *"Patching"* occurs with the lowest frequency in the 1st column, *"Repair"* occurs with lowest frequency in the 2nd column and so on.

iii. Combine a set consisting of unique features as follows, for each row $n$ in the input matrix from (301), obtain a pre-candidate $q$ by evaluating the first element of the pair, this *is* $\chi_j$. Then store the corresponding feature ($\chi \to \chi_k$) that is not in the set of pre-candidates $p$. Such as:

$$q = \{ \chi \mid (\chi_j \not\ni p)^t, \dots \}; \quad \forall t \in \{1,2,\dots,n\} \tag{3}$$

In the example of Figure 5, at the first iteration q we have:

$$q = \{(\text{"assetType"}: \text{"Image"}), (\text{"annotations"}: \text{"JSONobject"})\}$$

iv. Create a set of class candidates $P_\alpha$ by appending the resulting pre-candidates $p$ and $q$. Where, $\alpha$ is an integer number representing the iteration index which indicates the number of times this procedure has been executed:

$$P_\alpha = p \cup q \tag{4}$$

For the first iteration of the example of Figure 5, this step returns the following class candidate with:

$$P_1 = \{(\text{"description"}: \text{"Patching"}), (\text{"jobType"}: \text{"Repair"}),$$
$$(\text{"jobCategory"}: \text{"Broadband"}), (\text{"domain"}: \text{"Colchester and Ipswich"}),$$
$$(\text{"skillCode"}: \text{"UGREP"}), (\text{"links"}: \text{"JSONobject"}), (\text{"timeStamp"}: \text{"ISO"}),$$
$$(\text{"location"}: \text{"JSONobject"}), (\text{"assetType"}: \text{"Image"}), (\text{"annotations"}: \text{"JSONobject"})\}$$

v. Remove elements containing nested matrices from the set $P_\alpha$. Such as $P_\alpha = \{(\lambda_1{:}v_1),\dots,(\lambda_n{:}v_n)\}$, where $n = \{1,2,\dots, S\}$, $S$ estates the set size, $\lambda$ is a property label and v is its corresponding value which are contained in "JSONobject" and will be treated subsequently.
In the example of Figure 5 after this step the resulting set is as follows:

$$P_1 = \{("description": "Patching"), ("jobType": "Repair"),$$
$$("jobCategory": "Broadband"), ("domain": "Colchester and Ipswich"),$$
$$("skillCode": "UGREP"), ("timeStamp": "ISO"), ("assetType": "Image")\}$$

vi. Add the obtained set $P_\alpha$ to a vector C that contains output candidates. Such as:

$$C = (C_i \mid i \in P_\alpha) \tag{5}$$

vii. Take each element removed in step (v) as input in the step (i) and repeat. Note that for each nested matrix a new set of candidates $P_\alpha$ will be created. Therefore, $\alpha$ indicates the number of the iteration responsible for creating each set $P_\alpha$.
For $\alpha = 1$, the obtained $P_1$ is added to vector C which contains the output candidates:

$$C = (P_1)$$

viii. When no nested matrices are found, then stop. The resulting output is a vector of candidates $C$, containing $n$ indexed set of candidates such as:

$$C = (P_1, P_2, .., P_n); \qquad n = \{1, 2, ..., \mathbb{N}\} \tag{6}$$

NOTE: As indicated in step (vii), this procedure will be repeated for each nested removed element in step (v), which is when the element "JSONobject" will be removed. In this example we are executing the first iteration only, however, it can be understood that we will obtain four set of candidates: $P_1$ at the first iteration; next, $P_2$ that results from the processing the "JSONobject" corresponding to the *"links"* element. And finally $P_3$ which corresponds to the *"location"* element.
Next, the procedure takes the resulting vector of candidates C as input and executes the following procedure:
ix. Take each element from a vector *C* with size *S* that is a feature $\chi$ integrated by a property label ($\lambda$) and their corresponding value (*v*) such as:

$$\chi_i = (\lambda : v)_i \qquad \forall i \in \{1, 2, .. S\} \tag{7}$$

In the example this step returns the following elements:

$$\chi_1 = ("description": "Patching")_1$$

$$\chi_2 = ("jobType": "Repair")_2$$

$$\chi_3 = ("jobCategory": "Broadband")_3$$

$$\chi_4 = ("domain": "Colchester and Ipswich")_4$$

$$\chi_5 = ("skillCode": "UGREP")_5$$

$$\chi_6 = (\text{"timeStamp"}: \text{"ISO"})_6$$

$$\chi_7 = (\text{"assetType"}: \text{"Image"})_7$$

x. For each property label ($\lambda$) of each element obtained in (ix), determine whether it is a compound word in the form of for example "camelCase" notation. In other words, evaluate whether the property label ($\lambda$) contains more than one word. Where, the "camelCase" notation provides the means to determinate such condition. This is "camelCase" $\neq$ "singleword".

In the example, the compound words according with their property labels ($\lambda$) (*e.g.jobType*) are:

$$\chi_2 = (\text{"jobType"}: \text{"Repair"})_2$$

$$\chi_3 = (\text{"jobCategory"}: \text{"Broadband"})_3$$

$$\chi_5 = (\text{"skillCode"}: \text{"UGREP"})_5$$

$$\chi_6 = (\text{"timeStamp"}: \text{"ISO"})_6$$

$$\chi_7 = (\text{"assetType"}: \text{"Image"})_7$$

with the single words:

$$\chi_1 = (\text{"description"}: \text{"Patching"})_1$$

$$\chi_4 = (\text{"domain"}: \text{"Colchester and Ipswich"})_4$$

xi. For each compound word, that contains a "string" data-type value (*v*) create a primary **class** $C_{p_i}$, where *i* = {1,2, ... ,*n*} represents the class index.

In the example, this step assigns the following *primary* classes (nodes on top of Fig. 6):

$$C_{p_1} \rightarrow \chi_2 = (\text{"jobType"}: \text{"Repair"})_2$$

$$C_{p_2} \rightarrow \chi_3 = (\text{"jobCategory"}: \text{"Broadband"})_3$$

$$C_{p_3} \rightarrow \chi_5 = (\text{"skillCode"}: \text{"UGREP"})_5$$

$$C_{p_4} \rightarrow \chi_7 = (\text{"assetType"}: \text{"Image"})_7$$

xii. For each compound word, that contains a "ISO" formatted value (*v*) create a **secondary class** $C_{s_i}$, where *i*={1,2,...,*n*} represents the class index. In the preferred embodiment, this procedure works with dates in ISO standardised format, e.g. YYYY-MM-DDTHH: MM: SS.MMMZ (other formats are obviously possible).

In the example, this step creates the following *secondary* class (nodes on bottom of Fig. 6):

$$C_{s_1} \rightarrow \chi_6 = (\text{"timeStamp"}: \text{"ISO"})_6$$

xiii. For each compound word, that contains a "number" date-type value ($v$) create a **secondary class** $C_{s_i}$, where $i$ = {1,2, ... ,$n$} represents the class index.

In the example, this step does not find the specified criteria, however the process is ready to find numeric data.

xiv. For each single word create a **secondary class** $C_{s_i}$, where $i$ = {1,2, ...,$n$} represents the class index, regardless of the date-type in value ($v$).

In the example, this step generates the following *secondary* classes (nodes on bottom of Fig. 6):

$$C_{s_2} \rightarrow \chi_1 = (\text{"description"}: \text{"Patching"})_1$$

$$C_{s_3} \rightarrow \chi_4 = (\text{"domain"}: \text{"Colchester and Ipswich"})_4$$

xv. For each *primary* class $C_{p_i}$ with $i \in \{1,2,.. N\}$, where $N$ is the total number of primary classes. Create a structure E with $\Psi$ vertexes ($\psi_1, ...\psi_n$) such as $\psi_1 = \lambda_1$, where $\psi_1$ is the root vertex and $\lambda_1$ is the corresponding label of the primary class $i$. Successively, $\psi_i = v_i$ where $i \geq 2$ and $v_i$ is the corresponding value of the primary class $i$.

In our example, we defined as primary classes the following:

$$C_{p_1} \rightarrow \chi_2 = (\text{"jobType"}: \text{"Repair"})_2$$

$$C_{p_2} \rightarrow \chi_3 = (\text{"jobCategory"}: \text{"Broadband"})_3$$

$$C_{p_3} \rightarrow \chi_5 = (\text{"skillCode"}: \text{"UGREP"})_5$$

$$C_{p_4} \rightarrow \chi_7 = (\text{"assetType"}: \text{"Image"})_7$$

Thus, this step creates four structures E with their corresponding $\Psi$ vertexes. The root vertex in each structure is defined as $\psi_1 = \lambda_1$ and the non-root vertexes are defined by $\psi_i = v_i$ $i \in \{2,.. N\}$. The resulting vertexes for each structure are as follows:

$$E_1 = \Psi = (\psi_1 = \text{"jobType"}, \quad \psi_2 = \text{"Broadband"}, \quad \psi_3 = \text{"UGREP"}, \psi_4 = \text{"Image"})$$

$$E_2 = \Psi = (\psi_1 = \text{"jobCategory"}, \quad \psi_2 = \text{"Repair"}, \quad \psi_3 = \text{"UGREP"}, \psi_4 = \text{"Image"})$$

$$E_3 = \Psi = (\psi_1 = \text{"skillCode"}, \quad \psi_2 = \text{"Repair"}, \quad \psi_3 = \text{"Broadband"}, \psi_4 = \text{"Image"})$$

$$E_4 = \Psi = (\psi_1 = \text{"assetType"}, \quad \psi_2 = \text{"Repair"}, \quad \psi_3 = \text{"Broadband"}, \psi_4 = \text{"UGREP"})$$

this structure can be visualised at the top of Figure 6.

xvi. For each structure $E_j$ where $\forall j \in \{1,2,.. N\}$, and $N$ is the total number of structures, create a link from the root vertex $\psi_1$ to all other vertexes ($\psi_2, ...\psi_n$) where $n$ is the total number of vertexes. Such as $v_1: \psi_1 \rightarrow \psi_k$, where $v_1$ is the value of the corresponding label $\lambda_1$ and $k$ = {2,..., $n$} is the vertex index.

In the example, this step creates links between each structure E are created from the root vertex $\psi_1$ to all other vertexes ($\psi_2, ...\psi_n$) where $n$ is the total number of vertices. The corresponding values $v_1: \psi_1 \rightarrow \psi_k$ in each structure are as follows:

$$E_1 \rightarrow (\text{"Repair"}: \psi_1 \rightarrow \psi_2, \quad \text{"Repair"}: \psi_1 \rightarrow \psi_3, \quad \text{"Repair"}: \psi_1 \rightarrow \psi_4)$$

$$E_2 \rightarrow (\text{"Broadband"}: \psi_1 \rightarrow \psi_2, \quad \text{"Broadband"}: \psi_1 \rightarrow \psi_3,$$

$$\text{"Broadband"}: \psi_1 \rightarrow \psi_4)$$

$$E_3 \rightarrow (\text{"UGREP"}: \psi_1 \rightarrow \psi_2, \quad \text{"UGREP"}: \psi_1 \rightarrow \psi_3, \quad \text{"UGREP"}: \psi_1 \rightarrow \psi_4)$$

$$E_4 \rightarrow (\text{"Image"}: \psi_1 \rightarrow \psi_2, \quad \text{"Image"}: \psi_1 \rightarrow \psi_3, \quad \text{"Image"}: \psi_1 \rightarrow \psi_4)$$

xvii. For each *secondary* class $C_{s_i}$ with $i \in \{1,2,..N\}$, with $N$ is the total number of secondary classes. Create $\Pi$ vertexes $(\phi_1,... \phi_n)$ such as $\phi_l = v_i$, where $l = \{1,2,..., n\}$ is the vertex index and $v_i$ is the corresponding value of the secondary class $i$.

In our example, we define the following secondary classes:

$$C_{s_1} \rightarrow \chi_6 = (\text{"timeStamp"}: \text{"ISO"})_6$$

$$C_{s_2} \rightarrow \chi_1 = (\text{"description"}: \text{"Patching"})_1$$

$$C_{s_3} \rightarrow \chi_4 = (\text{"domain"}: \text{"Colchester and Ipswich"})_4$$

Thus, the resulting $\Pi$ vertexes $(\phi_1,... \phi_n)$ that corresponds to the $v_i$ value of the secondary class i are as follows:

$$C_{s_1} \rightarrow \chi_6 = (\text{"timeStamp"}: \text{"ISO"})_6 \therefore \phi_1 = \text{"ISO"}$$

$$C_{s_2} \rightarrow \chi_1 = (\text{"description"}: \text{"Patching"})_1 \therefore \phi_2 = \text{"Patching"}$$

$$C_{s_3} \rightarrow \chi_4 = (\text{"domain"}: \text{"Colchester and Ipswich"})_4 \therefore \phi_3 = \text{"Colchester and Ipswich"}$$

xviii. For each structure $E_j$ *with* $j \in \{1,2,.. N\}$- and where $N$ is the total number of structures. Create a link from each non-root vertexes in $\Psi$ to all vertexes in $\Pi$. Such as $\lambda_i: \psi_k \rightarrow \phi_l$, where $\lambda_l$ represents the label of the corresponding secondary class, $k = \{1,2,...,n\}$ is the non-root vertex index contained in $\Psi$ and $l = \{1,2,...,n\}$ is the vertex index contained in $\Pi$.

In the example, this step links each structure E, from each non-root vertexes contained in $\Psi$ to all vertexes contained in $\Pi$ results as follows:

$$E_1 \rightarrow (\text{"timeStamp"}: \psi_2 \rightarrow \phi_1, \quad \text{"timeStamp"}: \psi_3 \rightarrow \phi_1, \quad \text{"timeStamp"}: \psi_4 \rightarrow \phi_1)$$

$$E_1 \rightarrow (\text{"description"}: \psi_2 \rightarrow \phi_2, \quad \text{"description"}: \psi_3 \rightarrow \phi_2, \quad \text{"description"}: \psi_4 \rightarrow \phi_2)$$

$$E_1 \rightarrow (\text{"domain"}: \psi_2 \rightarrow \phi_3, \quad \text{"domain"}: \psi_3 \rightarrow \phi_3, \quad \text{"domain"}: \psi_4 \rightarrow \phi_3)$$

$$E_2 \rightarrow (\text{"timeStamp"}: \psi_2 \rightarrow \phi_1, \quad \text{"timeStamp"}: \psi_3 \rightarrow \phi_1, \quad \text{"timeStamp"}: \psi_4 \rightarrow \phi_1)$$

$$E_2 \rightarrow (\text{"description"}: \psi_2 \rightarrow \phi_2, \quad \text{"description"}: \psi_3 \rightarrow \phi_2, \quad \text{"description"}: \psi_4 \rightarrow \phi_2)$$

$$E_2 \rightarrow ("domain": \psi_2 \rightarrow \phi_3, \qquad "domain": \psi_3 \rightarrow \phi_3, \qquad "domain": \psi_4 \rightarrow \phi_3)$$

$$E_3 \rightarrow ("timeStamp": \psi_2 \rightarrow \phi_1, \qquad "timeStamp": \psi_3 \rightarrow \phi_1, \qquad "timeStamp": \psi_4 \rightarrow \phi_1)$$

$$E_3 \rightarrow ("description": \psi_2 \rightarrow \phi_2, \qquad "description": \psi_3 \rightarrow \phi_2, \qquad "description": \psi_4 \rightarrow \phi_2)$$

$$E_3 \rightarrow ("domain": \psi_2 \rightarrow \phi_3, \qquad "domain": \psi_3 \rightarrow \phi_3, \qquad "domain": \psi_4 \rightarrow \phi_3)$$

$$E_4 \rightarrow ("timeStamp": \psi_2 \rightarrow \phi_1, \qquad "timeStamp": \psi_3 \rightarrow \phi_1, \qquad "timeStamp": \psi_4 \rightarrow \phi_1)$$

$$E_4 \rightarrow ("description": \psi_2 \rightarrow \phi_2, \qquad "description": \psi_3 \rightarrow \phi_2, \qquad "description": \psi_4 \rightarrow \phi_2)$$

$$E_4 \rightarrow ("domain": \psi_2 \rightarrow \phi_3, \qquad "domain": \psi_3 \rightarrow \phi_3, \qquad "domain": \psi_4 \rightarrow \phi_3)$$

The result of this process (302) is exemplified in Figure 6, which shows a diagram with all the relationships.

Next, the monitoring and evaluation (303) process encompasses the required tasks to monitor the classes creation engine. This process employs control variables and provide an evaluation measurement. The procedure is outlined as follows:

i. Each time the engine is executed configure/update the following control variables which in the preferred embodiment are as follows:

| Variable | Description |
|---|---|
| RETURN_CLASS | Number of output classes, default value = 1. |
| CREATION_CLASS_DATE | Creation class date formatted in ISO standard. |
| ASSIGNATION_COUNTER | Number of times a class has been assigned as final result. Initially stated = 0. |
| LATEST_CLASS_UPDATE | Date corresponding to the latest assignation. |
| CLASS_INDEX | Index corresponding to an available class. |
| CLASS_VERTEX_ COUNTER | Number of vertices that a class has. |
| PARENT_GROUP | Array that contains the relation of nested classes. For example [1,2,3,4] reflects a class that is result of 4 nested matrices (see 302). |
| TRAINING_SESSION | Number of times the system has been trained. To be increased after finishing a training run. |
| MAX_PROCESS_TIME | Record of the maximum time to execute a classification process when different to training phases. |
| MIN_PROCESS_TIME | Record of the minimum time to execute a classification process when different to training phases. |
| TOTAL_PROCESSED_ ASSETS | Number of total assets being processed. This value is integrated by [(testing: number), (training: number)]. |

ii. Generate a distribution value for the ASSIGNATION_COUNTER variable. Such as it reflects the distribution of the assignation of classes. As an example, this can be done by generating a quartile range [0.25, 0.50, 0.75, 1].

iii. After a given number of runs (e.g. 100) delete classes that are within the lower quartile, if and only if the creation day is higher than a given number (30) of days (other similar methods can be devised to decide when to delete). At this stage, the system has executed and generated outputs correspondent to processes (301), (302) and (303). As pointed out in (301), the method implements dynamic class generation associated with non-fixed rules. This demands fuzzy sets being generated accordingly to the extracted evaluated features (301) and their resulting classes (302). Therefore, the fuzzy sets generation (304) process automatically generates membership functions (MFs) required to evaluate inputs and corresponding output. This procedure is detailed as follows:

i. Take the structures with extracted features produced by process (302) (Figure 6 illustrates an example as reference of such a structure).

ii. According to general accepted fuzzy set theory, create a corresponding fuzzy set $A_i$ in the X universe of discourse with range [0,1]. For each $x_i$ element such as $A_i\{x_i, \mu_{A_i}(x_i)|x_i \in X\}$, where, $\mu_{A_i}(x_i)$ is the corresponding membership function of $x_i$ in $A_i$, $i = \{1,2, ..., N\}$ is the set index and $N$ is the total number of considered elements. Then select the desired standard membership model, this could include: triangular, left-shoulder, right-shoulder and trapezoidal among others.

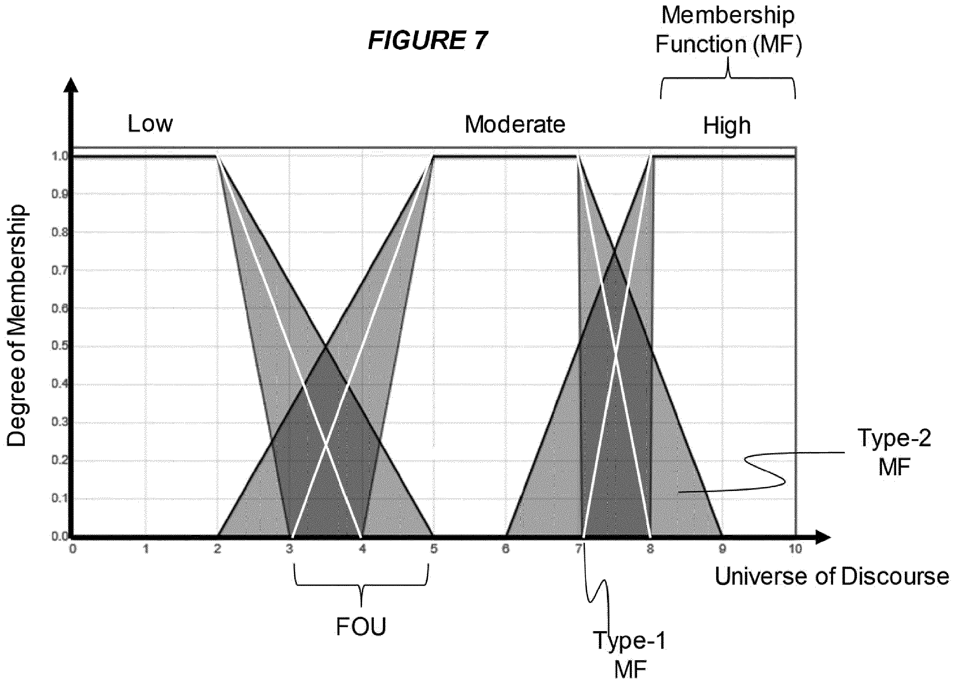

Continuing with the example from above, we selected a left-shoulder membership function, a trapezoid membership function and a right-shoulder membership function (see Figure 7).

iii. Obtain a unique fuzzy set for each item associated to the edges connecting primary categories only.

In the example, the fuzzy sets for each item associated to the edges are as follows (primary classes):

$$A_{Repair}\{x_i, \mu_{A_{Repair}}(x_i)\}$$

$$A_{Broadband}\{x_i, \mu_{A_{Broadband}}(x_i)\}$$

$$A_{UGREP}\{x_i, \mu_{A_{UGREP}}(x_i)\}$$

$$A_{Image}\{x_i, \mu_{A_{Image}}(x_i)\}$$

iv. Similarly, obtain a unique fuzzy set for each item associated to the nodes (secondary categories).

In the example, the fuzzy sets indicated in this step are as follows:

$$A_{ISODate}\{x_i, \mu_{A_{ISODate}}(x_i)\}$$

$$A_{Patching}\{x_i, \mu_{A_{Patching}}(x_i)\}$$

$$A_{ColchesterAndIpswich}\{x_i, \mu_{A_{ColchesterAndIpswich}}(x_i)\}$$

v. Label the fuzzy sets generated in steps (iii) and (iv) as **"antecedent"** candidates in the fuzzy logic model.

vi. Obtain a fuzzy set for each item corresponding to the nodes in the top of the structure.

In the example, the resulting fuzzy sets are:

$$A_{JobType}\{x_i, \mu_{A_{JobType}}(x_i)\}$$

$$A_{JobCategory}\{x_i, \mu_{A_{JobCategory}}(x_i)\}$$

$$A_{SkillCode}\{x_i, \mu_{A_{SkillCode}}(x_i)\}$$

$$A_{assetType}\{x_i, \mu_{A_{assetType}}(x_i)\}$$

vii. Label the fuzzy sets generated in step (vi) as **"consequent"** candidates.

viii. Associate linguistic labels for each fuzzy set. This invention implements a similarity criterion expressed by linguistic labels for each fuzzy set assumed to be {*low, moderate, high*}, rather than numerical values (Figure 7). In the example, associate the linguistic labels {*low, moderate, high*} to each fuzzy set.

ix. Segment the universe of discourse accordingly to the linguistic labels described in (viii). In this step, membership functions are built according to type-1 fuzzy logic theory. This value can be tuned accordingly to any precision requirement and can be modified anytime by redefining linguistic terms in step (viii). In the example, segments the universe of discourse in [0,0.4], [0.3,0.8] and [0.7,1], (Ref. Figure 7) associated to *low, moderate,* and *high* respectively.

x. This invention also encompasses a type-2 fuzzy sets approach to model uncertainty, where type-2 fuzzy sets are created by adding a Footprint of Uncertainty (FOU). To do so, this invention includes an uncertainty factor ($\rho$) expressed in percentage term. When $\rho$ = 0% it denotes absence of uncertainty. When 0% < $\rho \leq$ 100%, it results in the generation of upper $\overline{\mu_{\tilde{A}}}(x)$ and lower membership $\underline{\mu_{\tilde{A}}}(x)$ functions which can be modelled via type-2 fuzzy logic theory. Therefore, the coordinates for upper membership functions are given by a left point $A$ and a right point B, such as ($A - \rho$) and ($B + \rho$), respectively. Similarly, the coordinates of the lower membership function are given by ($A + \rho$) and ($B - \rho$).

The uncertainty factor ($\rho$) mentioned in this step can be tuned as required. In our example we use $\rho$ = 10%. Figure 7 illustrates a *generic* output of this fuzzy sets generation (304) process.

Next, the fuzzy rules extraction (305) process is executed in order to obtain a set of R rules. A rule can be seen as a conditional statement, in the form of:

IF some antecedent THEN some consequent

This process requires a domain-specific lexicon, which consists of a set of terminological entries related to certain operational domain. This lexicon can be replaced by any other source (open source or proprietary) when aiming to apply this classification process to a different source. Note that creation and management of the domain-specific lexicon is not covered by this specification.

Various classification models have accomplished rule extraction capabilities. For example, centroid-based clustering has succeeded in handling *numeric data* for prediction problems. Moreover, distribution-based methods have thrived on problems with underlying statistical distribution that states an inherent *mathematical model.* In addition, connectivity-based models also known as hierarchy clustering have been improved to work with large datasets related to problems where *distance* among objects allow identifying representative clusters. However, these approaches are not suitable for scenarios characterised by: a) lack of numeric data, b) absence of descriptive mathematical models, and c) meaningless objects' distance in the data space. Therefore, embodiments of the present invention provide rules extraction methods based on fuzzy logic principles that can be scaled to tackle the outlined classification problem.

It is important to consider that a KA could include all parameters previously extracted by the system, but in other cases, the KA could include only some of these parameters. Therefore, the outlined procedure considers this scenario as follows:

i. Map each set of antecedents to a set of inputs (*a*) and the corresponding consequent to an output (c). Such as:

$$\left(a^{(1)}:c^{(1)}\right),..,\left(a^{(N)}:c^{(N)}\right) = \left\{a_i^{(l)}, a_{i+1}^{(l)}, a_{i+2}^{(l)}, \dots, a_n^{(l)}:c^{(l)}\right\}_{l=1}^{N} \tag{8}$$

where, *N* is the total number of consequents, *l* is the consequent index, *i* = {1,..,*n*} is the antecedent index and *n* is the total number of antecedents.

Continuing with the example previously introduced in (301), at step (i) the corresponding mapping of antecedents and consequents is as follows:

$$= \left\{Repair_1^{(l)}, Broadband_2^{(l)}, UGREP_3^{(l)}, Image_4^{(l)}, ISO_5^{(l)}, Patching_6^{(l)}, ColchesterAndIpswich_7^{(l)}:JobType^{(l)}\right\}_{l=1}^{N}$$

$$= \left\{Repair_1^{(l)}, Broadband_2^{(l)}, UGREP_3^{(l)}, Image_4^{(l)}, ISO_5^{(l)}, Patching_6^{(l)}, ColchesterAndIpswich_7^{(l)}:JobCategory^{(l)}\right\}_{l=2}^{N}$$

$$= \left\{ Repair_1^{(l)}, Broadband_2^{(l)}, UGREP_3^{(l)}, Image_4^{(l)}, ISO_5^{(l)}, Patching_6^{(l)}, ColchesterAndIpswich_7^{(l)} : skillCode^{(l)} \right\}_{l=3}^{N}$$

$$= \left\{ Repair_1^{(l)}, Broadband_2^{(l)}, UGREP_3^{(l)}, Image_4^{(l)}, ISO_5^{(l)}, Patching_6^{(l)}, ColchesterAndIpswich_7^{(l)} : assetType^{(l)} \right\}_{l=4}^{N}$$

ii. Increase *i* by 1 and iterate step (i) such as *i* = {*i* + 1,..,*n*} and repeat until *i* = *n*. For example, initially, the resulting mapping when *i* = 1 is:

$$\left( a^{(1)} : c^{(1)} \right), \ldots, \left( a^{(N)} : c^{(N)} \right) = \left\{ a_1^{(l)}, a_2^{(l)}, a_3^{(l)}, \ldots, a_n^{(l)} : c^{(l)} \right\}_{l=1}^{N}$$

Iteratively, when *i* = 2 we obtain:

$$\left( a^{(1)} : c^{(1)} \right), \ldots, \left( a^{(N)} : c^{(N)} \right) = \left\{ a_2^{(l)}, a_3^{(l)}, a_4^{(l)}, \ldots, a_n^{(l)} : c^{(l)} \right\}_{l=1}^{N}$$

Similarly, when *i* = *n* we obtain:

$$\left( a^{(1)} : c^{(1)} \right), \ldots, \left( a^{(N)} : c^{(N)} \right) = \left\{ a_n^{(l)} : c^{(l)} \right\}_{l=1}^{N}$$

In our example, each iteration outlined in step (ii) results as follows:

When *i* = 2:

$$= \left\{ Broadband_2^{(l)}, UGREP_3^{(l)}, Image_4^{(l)}, ISO_5^{(l)}, Patching_6^{(l)}, ColchesterAndIpswich_7^{(l)} : JobType^{(l)} \right\}_{l=1}^{N}$$

$$= \left\{ Broadband_2^{(l)}, UGREP_3^{(l)}, Image_4^{(l)}, ISO_5^{(l)}, Patching_6^{(l)}, ColchesterAndIpswich_7^{(l)} : JobCategory^{(l)} \right\}_{l=2}^{N}$$

$$= \left\{ Broadband_2^{(l)}, UGREP_3^{(l)}, Image_4^{(l)}, ISO_5^{(l)}, Patching_6^{(l)}, ColchesterAndIpswich_7^{(l)} : skillCode^{(l)} \right\}_{l=3}^{N}$$

$$= \left\{ Broadband_2^{(l)}, UGREP_3^{(l)}, Image_4^{(l)}, ISO_5^{(l)}, Patching_6^{(l)}, ColchesterAndIpswich_7^{(l)} : assetType^{(l)} \right\}_{l=4}^{N}$$

When *i* = 3:

$$= \left\{ UGREP_3^{(l)}, Image_4^{(l)}, ISO_5^{(l)}, Patching_6^{(l)}, ColchesterAndIpswich_7^{(l)} : JobType^{(l)} \right\}_{l=1}^{N}$$

$$= \left\{ UGREP_3^{(l)}, Image_4^{(l)}, ISO_5^{(l)}, Patching_6^{(l)}, ColchesterAndIpswich_7^{(l)} : JobCategory^{(l)} \right\}_{l=2}^{N}$$

$$=$$

$$\left\{ UGREP_3^{(l)}, Image_4^{(l)}, ISO_5^{(l)}, Patching_6^{(l)}, ColchesterAndIpswich_7^{(l)} : skillCode^{(l)} \right\}_{l=3}^{N}$$

$$= \left\{ UGREP_3^{(l)}, Image_4^{(l)}, ISO_5^{(l)}, Patching_6^{(l)}, ColchesterAndIpswich_7^{(l)} : assetType^{(l)} \right\}_{l=4}^{N}$$

When $n$ = 4,5,6 ...
When $i$ = 7:

$$= \left\{ ColchesterAndIpswich_7^{(l)} : JobType^{(l)} \right\}_{l=1}^{N}$$

$$= \left\{ ColchesterAndIpswich_7^{(l)} : JobCategory^{(l)} \right\}_{l=2}^{N}$$

$$= \left\{ ColchesterAndIpswich_7^{(l)} : skillCode^{(l)} \right\}_{l=3}^{N}$$

$$= \left\{ ColchesterAndIpswich_7^{(l)} : assetType^{(l)} \right\}_{l=4}^{N}$$

iii. Obtain the antecedent statement for each resulting mapping from step (i) and (ii), with the corresponding linguistic label associated to each fuzzy set, in the following form:

$$R_l \colon IF\ a_1\ is\ \tilde{A}_1^l\ ...\ and\ a_n\ is\ \tilde{A}_n^l\ THEN\ ... \qquad (9)$$

where $l$ = {1,2,...,$R$} is the rule index, $R$ is the total number of rules, which, can be estimated as $R = T^n$, where $T$ is the total linguistic terms, $n$ = {1,2,...,$N$} is the input index, $a_1,..,a_n$ are inputs and $\tilde{A}$ is the linguistic value associated to the corresponding antecedent.

Determining the antecedent statement, results in $N$ clusters for each grouping of parameters, this is, $n$ = {1,2, ..., $N$} where $n$ represents the cluster index, which, in turn denotes the number of antecedents of the rule. For our example, this is:

When $n$ = 1:

$R_1$: If *ColchesterAndIpswich* is low then ...

$R_2$: If *ColchesterAndIpswich* is moderate then...

$R_3$: If *ColchesterAndIpswich* is high then ...

When $n$ = 2:

$R_1$: If *Patching* is low and *ColchesterAndIpswich* is low then ...

$R_2$: If *Patching* is low and *ColchesterAndIpswich* is moderate then ...

$R_3$: If *Patching* is low and *ColchesterAndIpswich* is high then ...

...

$R_6$: If *Patching* is moderate and *ColchesterAndIpswich* is high then ...

...

$R_9$: If *Patching* is high and *ColchesterAndIpswich* is high then ...

When $n = 3,4,5,6$ ...

When $n = 7$:

$R_1$: If *Repair* is low and *Broadband* is low and *UGREP* is low and *Image* is low and *ISO* is low and *Patching* is low and *ColchesterAndIpswich* is low then ...

...

$R_{2187}$: If *Repair* is high and *Broadband* is high and *UGREP* is high and *Image* is high and *ISO* is high and *Patching* is high and *ColchesterAndIpswich* is high then ...

The result of this procedure is all the possible antecedents of the total number of fuzzy rules. The total number of rules can be calculated as:

$$Number\ of\ rules = \#\ of\ membership\ functions^{\#\ of\ inputs}$$

Where *# of membership functions* (MF) are the ones defined in (305 - viii), and *# of inputs* are the *N* clusters for each grouping of parameters.

iv. From this point onwards, we start the testing phase where the fuzzy classification model is tested for a given KA. To do so we need to determine the corresponding consequent for all antecedent statements formulated in (iii). It is in this phase where we compare our current rule base of antecedents against the values of a new given KA. To illustrate this with an example, consider the following values as the annotated input values of a new KA.

$$= \left\{ Provision_1^{(l)}, Internet_2^{(l)}, IFTTC1_3^{(l)}, Video_4^{(l)}, ISO_5^{(l)}, Routing_6^{(l)}, Cambridge_7^{(l)} \right\}_{l=1}^{N}$$

a) For each antecedent $a_1,..,a_n$, retrieve its similarity ($\sigma$) value from the domain-specific lexicon as follows:

$$similarity\ \{a_1,..,a_n\} = \sigma = \left\{ a_1^{(l)}, a_2^{(l)}, a_3^{(l)}, a_4^{(l)}, a_5^{(l)}, a_6^{(l)}, a_7^{(l)} \right\}_{l=1}^{N}$$

For example, for each antecedent, after retrieving the similarity value for each parameter from the lexicon (not covered by this invention), we obtained the following values (in percentage):
similarity = {*Provision*$_1$*Internet*$_2$,*IFTTC1*$_3$,*Video*$_4$,*ISO*$_5$,*Routing*$_6$,*Cambridge*$_7$}

$$\sigma = \{50_1, 80_2, 80_3, 60_4, 20_5, 40_6, 20_7\}$$

b) Standardise a weight value among all the antecedents $a_1,..,a_n$, as follows:

$$wa_i = \frac{1}{i} \tag{10}$$

where, $i = \{1,..,n\}$ is the antecedent index, $n$ is the total number of antecedents.

Hierarchical order formalised during the training phase can be reflected by standardising and introducing the weight value among all the antecedents $a_1,..,a_n$, as follows:

$$wProvision_1 = \frac{1}{1}; \quad wInternet_2 = \frac{1}{2}; \quad wIFTTC1_3 = \frac{1}{3}; \quad wVideo_4 = \frac{1}{4};$$

$$wISO_5 = \frac{1}{5}; \quad wRouting_6 = \frac{1}{6}; \quad wCambridge_7 = \frac{1}{7}$$

c) Calculate the weighted mean for all antecedents obtained, as follows:

$$\bar{\alpha} = \frac{\sum_{i=1}^{n} w_i\, \sigma_i}{\sum_{i=1}^{n} w_i} \tag{11}$$

For example when calculating *Provision:*

$$\overline{\alpha_{Provision_1}} = \frac{\sum_{i=1}^{n} w_i\, \sigma_i}{\sum_{i=1}^{n} w_i}$$

$$= \frac{(0.50_1 * 1_1) + (0.80_2 * 0.5_2) + (0.80_3 * 0.33_3) + (0.60_4 * 0.25_4) + (0.20_5 * 0.2_5) + (0.40_6 * 0.16_6) + (0.20_7 * 0.1}{1_1 + 0.5_2 + 0.33_3 + 0.25_4 + 0.2_5 + 0.16_6 + 0.14_7}$$

$$\frac{1.452}{2.593} = 0.56$$

When calculating *Internet:*

$$\overline{\alpha_{Internet_2}} = \frac{\sum_{i=1}^{n} w_i\, \sigma_i}{\sum_{i=1}^{n} w_i}$$

$$= \frac{(0.80_2 * 0.5_2) + (0.80_3 * 0.33_3) + (0.60_4 * 0.25_4) + (0.20_5 * 0.2_5) + (0.40_6 * 0.16_6) + (0.20_7 * 0.14_7)}{0.5_2 + 0.33_3 + 0.25_4 + 0.2_5 + 0.16_6 + 0.14_7}$$

$$\overline{\alpha_{Internet_2}} = \frac{9.519}{1.593} = 0.5976$$

When calculating *IFTTC:*

$$\overline{\alpha_{IFTTC_3}} = \frac{\sum_{i=1}^{n} w_i\, \sigma_i}{\sum_{i=1}^{n} w_i}$$

$$= \frac{(0.80_3 * 0.33_3) + (0.60_4 * 0.25_4) + (0.20_5 * 0.2_5) + (0.40_6 * 0.16_6) + (0.20_7 * 0.14_7)}{0.33_3 + 0.25_4 + 0.2_5 + 0.16_6 + 0.14_7}$$

$$\overline{\alpha_{IFTTC_3}} = \frac{5.519}{1.093} = 0.505$$

When calculating *Video:*

$$\overline{\alpha_{Video_4}} = \frac{\sum_{i=1}^{n} w_i \, \sigma_i}{\sum_{i=1}^{n} w_i} = \frac{(0.60_4 \, * \, 0.25_4) + (0.20_5 \, * \, 0.2_5) + (0.40_6 \, * \, 0.16_6) + (0.20_7 \, * \, 0.14_7)}{0.25_4 + 0.2_5 + 0.16_6 + 0.14_7}$$

$$\overline{\alpha_{Video_4}} = \frac{2.852}{0.76} = 0.3755$$

When calculating *ISO:*

$$\overline{\alpha_{ISO_5}} = \frac{\sum_{i=1}^{n} w_i \, \sigma_i}{\sum_{i=1}^{n} w_i} = \frac{(0.20_5 \, * \, 0.2_5) + (0.40_6 \, * \, 0.16_6) + (0.20_7 \, * \, 0.14_7)}{0.2_5 + 0.16_6 + 0.14_7} = \frac{1.352}{0.51} = 0.2654$$

When calculating *Routing:*

$$\overline{\alpha_{Routing_6}} = \frac{\sum_{i=1}^{n} w_i \, \sigma_i}{\sum_{i=1}^{n} w_i} = \frac{(0.40_6 \, * \, 0.16_6) + (0.20_7 \, * \, 0.14_7)}{0.16_6 + 0.14_7} = \frac{0.9524}{0.31} = 0.3077$$

When calculating *Cambridge:*

$$\overline{\alpha_{Cambridge_7}} = \frac{\sum_{i=1}^{n} w_i \, \sigma_i}{\sum_{i=1}^{n} w_i} = \frac{(0.20_7 \, * \, 0.14_7)}{0.14_7} = \frac{0.285}{0.14} = 0.20$$

d) Depending on the value of the RETURN_CLASS configuration (see 303) select the corresponding output as follows:

If RETURN_CLASS = 1 (i.e. number of output classes is 1) then select the maximum weighted mean and associate it to its corresponding consequent index. Such as: {max($\overline{\alpha_l}$): $c^{(l)}$}.

For example:

$$\{\max(\overline{\alpha_1}, \overline{\alpha_2}, \overline{\alpha_3}, \overline{\alpha_4}, \overline{\alpha_5}, \overline{\alpha_6}, \overline{\alpha_7}): c^{(l)}\} = \{\max(0.56_1, 0.5976_2, 0.505_3, 0.3755_4, 0.2654_5, 0.3077_6, 0.20_7): c^{(l)}\}$$

$$\therefore \ (0.5976_2 : \ JobCategory^{(2)})$$

If RETURN_CLASS > 1 then select those weighted mean that are higher to the average of the evaluated entries and associate them to their corresponding consequent index. Such as:

$$\{ \ \overline{\alpha} \mid (\overline{\alpha_l} > \mu_{\overline{\alpha}}): \ c^{(l)} \ \}; \qquad \forall l \ \in \{1,2,\dots,n\} \tag{12}$$

e) Position the computed weighted mean in the universe of discourse and identify the boundaries according to the selected partition (see step (ix) in process 304). In this demonstration we consider 3 segments of the universe of discourse at [0,0.4], [0.3,0.8] and [0.7,1], respectively. Therefore, the corresponding fuzzy set can be determined as follows:

$$0 \le \overline{\alpha} \le 0.4 \text{ then } low \tag{13}$$

$$0 \ 0.3 \le \overline{\alpha} \le 0.8 \text{ then } moderate \tag{14}$$

$$0.7 \le \overline{\alpha} \le 1.0 \text{ then } high \tag{15}$$

In the example, the corresponding fuzzy set is determined as follows:

$$\overline{\alpha_2} = 59.76 \ \therefore \ \ 0.3 \le 0.5976 \le 0.8 \text{ then } moderate$$

v. Add the resulting fuzzy set to each consequent in (iv) to each rule, giving rise to the following form:

$$R_l: IF\ a_1\ \text{is}\ \tilde{A}_1^l \dots \text{and}\ a_n\ \text{is}\ \widetilde{A}_n^l\ \text{THEN}\ c_1\ is\ \widetilde{C}_1^N \tag{16}$$

where, $\tilde{C}$ corresponds to the linguistic value of the resulting consequent c.
In this example, 7 parameters are being fed into the system, therefore the result is as follows:
When $n = 7$:

$R_1$: If *Repair* is low and *Broadband* is low and *UGREP* is low and *Image* is low and *ISO* is low and *Patching* is low and *ColchesterAndIpswich* is low then *JobCategory* is moderate

...

$R_{2187}$: If *Repair* is high and *Broadband* is high and *UGREP* is high and *Image* is high and *ISO* is high and *Patching* is high and *ColchesterAndIpswich* is high then *JobCategory* is moderate.

vi. Normally, interval Type-2 fuzzy rule systems that evaluate large amount of input variables $a_n$ result in an expansion of potential rules. Therefore, rules having same antecedents but different consequents are expected. These are known as conflicting rules. Computing the weighted average ($E\varpi^{(l)}$) for the conflicting group is an accepted method for solving these scenarios. This calculation is as follows:

$$E\varpi^{(l)} = \frac{\sum_{u=1}^{N_l} c^{\left(t_u^l\right)} w_i^{\left(t_u^l\right)}}{\sum_{u=1}^{N_l} w_i^{\left(t_u^l\right)}} \tag{17}$$

where $u = \{1, ..., N\}$ and $t_u^l$ is the index of the conflicting group *l*. The rule weight is expressed by *w* and $i = \{1,..., N\}$ is the rule index. Therefore, the resulting weighted average is fed back to step (v) such as, former $a_s^{(t)}$ becomes $E\varpi^{(l)}$.

For example, in case that the maximum weighted mean obtained in step (iv - d) is shared among two or more indexes, then conflicting rules will appear. Similarly, the same scenario occurs when the RETURN_CLASS is higher than 1. Therefore, resolving conflicting rules can be achieved by developing step (vi) and then aggregated as outlined in step (vii).

vii. Finally, the $N_l$ rules are combined into a single rule, such as:

$$R_l: IF\ a_1\ \text{is}\ \tilde{A}_1^l \dots \text{and}\ a_n\ \text{is}\ \widetilde{A}_n^l\ \text{THEN}\ c_1\ is\ \widetilde{C}_1^l \tag{18}$$

where $l = \{1,2,...,R\}$ is the rule index, R is the total number of rules and $n = \{1,2,..., N\}$ is the input index.

The next process is the classifier designation (306) which is executed in order to compute an output class. This process is outlined as follows:

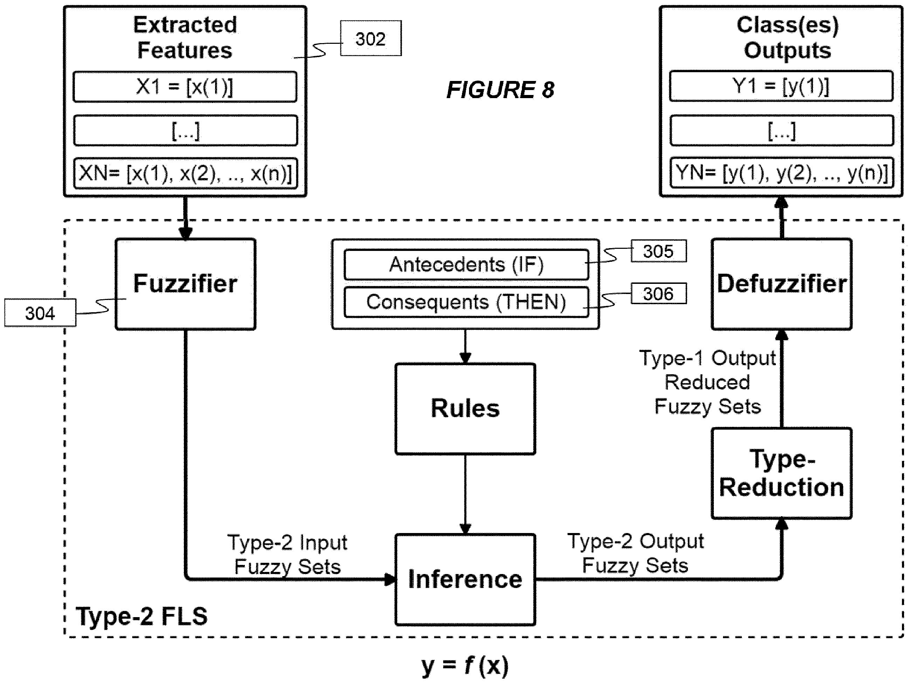

i. Feed the similarity value corresponding to the features for classification to the Fuzzifier (as depicted in Figure 8). Continuing with the example introduced in (301) and developed throughout this process, the obtained similarity value taken from the lexicon to:

similarity

$$= \{Provision_1 Internet_2, IFTTC1_3, Video_4, ISO_5, Routing_6, Cambridge_7\}$$

$$\sigma = \{5.0_1, 8.0_2, 8.0_3, 6.0_4, 2.0_5, 4.0_6, 2.0_7\}$$

this time in base 1 (instead of percentage expression used earlier).

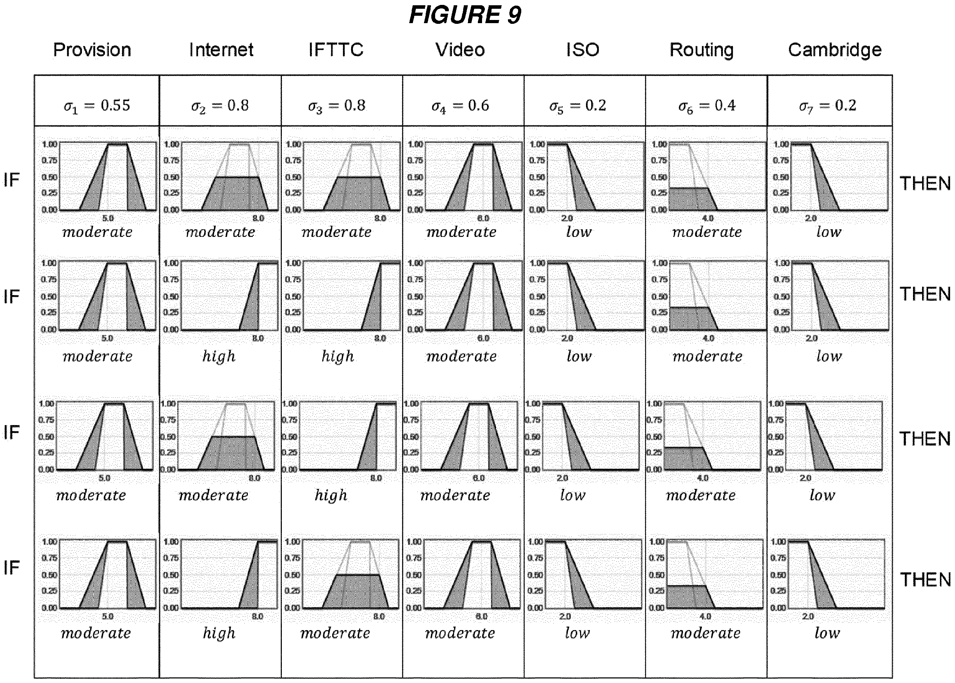

Therefore, provide this values to the fuzzifier. Figure 9 depicts these values and their correspondent fuzzification.

ii. Activate the corresponding set of rules according to the rule base created in (305).

In our example, the following fuzzy rules are triggered:

If *Repair* is moderate and *Broadband* is moderate and *UGREP* is moderate and *Image* is moderate and *ISODate* is low and *Patching* is low and *ColchesterAndIpswich* is low then *JobCategory* is moderate

If *Repair* is moderate and *Broadband* is high and *UGREP* is high and *Image* is moderate and *ISODate* is low and *Patching* is low and *ColchesterAndIpswich* is low then *JobCategory* is moderate

If *Repair* is moderate and *Broadbandis* moderate and *UGREPis* high and *Image* is moderate and *ISODate* is low and *Patchingis* low and *ColchesterAndIpswich* is low then *JobCategory* is moderate

If *Repair* is moderate and *Broadband* is high and *UGREPis* moderate and *Image* is moderate and *ISODate* is low and *Patching is* low and *ColchesterAndIpswich* is low then *JobCategory* is moderate

iii. Select the desired type reduction method.

In our example we use centroid type reduction, however, any method supported by the fuzzy theory is suitable for being used.

iv. Defuzzify the obtained result, therefore provide the classification output.

Since we use centroid type reduction, the defuzzification is obtained by simple adding the most left point and the most right point resulting of such process and dividing this value by 2, that is:

$$\frac{2.07 + 8.92}{2} = 5.5$$

In order to reduce complexity, this demonstration provides a single class. This is, a moderate *JobCategory.* However, the outlined implementation allows to understand the case of having more than one resulting class. In which cases, the output selection method (307) resolves for further metadata annotation (308) process.

The next process is the output selection (307) which is executed in order to select an output class. This process is outlined as follows:

i. Vectorise the set of resulting class from (307) by including a pair such as (*class*:*value*). In the example started from (301), the resulting vector contains a single element:

[(*JobCategory*:5.5)] However, to illustrate process (307) let us assume that our vector contains the following hypothetic values:

[(*JobCategory*:5.5), (*JobType*:3.2), (*AssetType*:5.4), (*SkillCode*:7.1)] where, each element corresponds to the resulting defuzzification explained in (306).

ii. Sort the resulting vector from (i) in ascending order.

In our example, sorting the resulting vector in ascending order gives us the following result:

[(*JobType*:3.2), (*AssetType*:5.4), (*JobCategory*:5.5), (*SkillCode*:7.1)].

iii. Evaluate the RETURN_CLASS variable, and select the maximum values equal to the number of the set mentioned variable.

This example sets the RETURN_CLASS variable equal to 1. However, there can be illustrated to have a value equal to 2 for demonstration purposes. Therefore, the selected values would be:

[(*JobCategory*:5.5), (*SkillCode*:7.1)]

Finally, the metadata annotation (308) process is executed in order to return an annotated object with the classification information embedded for subsequent functions such as personalisation and content delivery. This process output is depicted in Table 2 above for our example. The resulting n-tuple in which each element represents the most relevant suitable categories for the knowledge asset being classified is stored as follows:

i. For each element in the vector obtained in (308), identify its corresponding node in the hierarchical structure generated in the training phase (Figure 6).

ii. For each identified node, create a relation (vertex: [node(s)]) by registering the corresponding attached labels that reflect the set of extracted knowledge. Continue until the end of the hierarchy has been reached.

iii. Append an object named *"classification"* into the input asset.

iv. Create an attribute "*totalItems*" to record the resulting number of classes.

v. For each item reported in the "*totalItems*" value create an object "item" + index number.

vi. Create an attribute *"score"* to report the defuzzified value obtained in (307), a *"class'* attribute to record the name of the class, and a "*value*" attribute to record the value.

vii. Append an object named "data-class" to record the relations created in (ii) identifying between primary and secondary classes by creating specific objects within this element.

The classification method can be executed off-line, increasing the performance of the KMS in processes that require optimised processing times (e.g. when interacting with users in real-time), which could help accomplishing real-time personalisation and content delivery.

Insofar as embodiments of the invention described are implementable, at least in part, using a software-controlled programmable processing device, such as a microprocessor, digital signal processor or other processing device, data processing apparatus or system, it will be appreciated that a computer program for configuring a programmable device, apparatus or system to implement the foregoing described methods is envisaged as an aspect of the present invention. The computer program may be embodied as source code or undergo compilation for implementation on a processing device, apparatus or system or may be embodied as object code, for example.

Suitably, the computer program is stored on a carrier medium in machine or device readable form, for example in solid-state memory, magnetic memory such as disk or tape, optically or magneto-optically readable memory such as compact disk or digital versatile disk etc., and the processing device utilises the program or a part thereof to configure it for operation. The computer program may be supplied from a remote source embodied in a communications medium such as an electronic signal, radio frequency carrier wave or optical carrier wave. Such carrier media are also envisaged as aspects of the present invention.

It will be understood by those skilled in the art that, although the present invention has been described in relation to the above described example embodiments, the invention is not limited thereto and that there are many possible variations and modifications which fall within the scope of the invention.

The scope of the present invention includes any novel features or combination of features disclosed herein. The applicant hereby gives notice that new claims may be formulated to such features or combination of features during prosecution of this application or of any such further applications derived therefrom. In particular, with reference to the appended claims, features from dependent claims may be combined with those of the independent claims and features from respective independent claims may be combined in any appropriate manner and not merely in the specific combinations enumerated in the claims.

**Claims**

1. A computer implemented method of classifying a plurality of media assets for subsequent retrieval by a knowledge management system (KMS), the method comprising:

   accessing, for each asset, metadata associated with the asset, the metadata expressing characteristics of the asset and/or a content of the asset;
   classifying each asset based on the accessed metadata for the asset using a fuzzy logic classifier to generate a fuzzy classification as an n-tuple for the asset,
   wherein assets are classified into a set of dynamically defined classes, the classes being defined based on features of assets extracted from the asset metadata, such that the addition and/or removal of assets leads to a redefinition of the classes in the set, and
   wherein the n-tuple for an asset has a plurality of elements in which each element indicates one or more most relevant suitable classes of the classification for the asset.

2. The method of claim 1 further comprising: the KMS receiving a request for one or more media assets, the request having associated metadata characterising a context of the request; and classifying the request based on the metadata to identify a class of assets suitable for responding to the request; and selecting one or more assets in the identified class for use in responding to the request.

3. The method of any preceding claim wherein the media assets include one or more of: textual assets; video assets; audio assets; internet links; and assets suitable for rendering or representing in a virtual reality (VR) system.

4. The method of any of claims 1 or 2 wherein the request originates from a requester including a client computer system communicatively connected to a virtual reality output (VR) device for use by an operator, and further wherein a server is provided as a remote access system (RAS) for providing knowledge assets as media assets to the client via the KMS, wherein the request metadata includes context information comprising one or more of: a location of the operator; a technical environment of the operator; a device, appliance or system accessed by, visible to or engageable with the operator; and environmental parameters of an environment in which the operator is located, and wherein the one or more assets selected for response to the request includes at least one asset renderable in the VR environment for informing the operator of an operation in respect of the context.

5. The method of any preceding claim wherein the assets include one or more mixed reality (MR) assets.

6. The method of any preceding claim wherein the assets include one or more augmented reality (AR) assets.

7. A computer system including a processor and memory storing computer program code for performing the steps of any preceding claim.

8. A computer program element comprising computer program code to, when loaded into a computer system and executed thereon, cause the computer to perform the steps of a method as claimed in any of claims 1 to 6.

# FIGURE 1

| CPU 102 | STORAGE 104 | I/O 106 |
|---|---|---|

BUS 108

# FIGURE 2

Classifier (3)

Fuzzy Classifications (4)

1 2 3 4 5 2

# FIGURE 4

START

10 — Access metadata associated with each asset

12 — Classify each asset based on metadata using fuzzy logic classifier

STOP

FIGURE 3

Training phase

Testing phase

EP 3 624 065 A1

300

302 Class Definition

304 Fuzzy Sets Generation

306 Classifier Designation

301 Feature Extraction

303 Monitoring and Evaluation

305 Fuzzy Rules Definition

307 Output Selection

308 Metadata Annotation

200

400

FIGURE 5A

| Fig 5A | Fig 5B |
|--------|--------|
| Fig 5C | Fig 5D |

( "assetType": "Image" ; "description": "Patching" ) ( "assetType": "Image" ; "jobType": "Repair" ) ( "assetType": "Image" ; "jobCategory": "Broadband" ) ( "assetType": "Image" ; "domain": "Colchester and Ipswich" )

( "description": "Patching" ; "assetType": "Image" ) ( "description": "Patching" ; "jobType": "Repair" ) ( "description": "Patching" ; "jobCategory": "Broadband" ) ( "description": "Patching" ; "domain": "Colchester and Ipswich" )

( "jobType": "Repair" ; "assetType": "Image" ) ( "jobType": "Repair" ; "description": "Patching" ) ( "jobType": "Repair" ; "jobCategory": "Broadband" ) ( "jobType": "Repair" ; "domain": "Colchester and Ipswich" )

( "jobCategory": "Broadband" ; "assetType": "Image" ) ( "jobCategory": "Broadband" ; "description": "Patching" ) ( "jobCategory": "Broadband" ; "jobType": "Repair" ) ( "jobCategory": "Broadband" ; "domain": "Colchester and Ipswich" )

( "domain": "Colchester and Ipswich" ; "assetType": "Image" ) ( "domain": "Colchester and Ipswich" ; "description": "Patching" ) ( "domain": "Colchester and Ipswich" ; "jobType": "Repair" ) ( "domain": "Colchester and Ipswich" ; "jobCategory": "Broadband" )

EP 3 624 065 A1

## FIGURE 5B

| Fig 5A | Fig 5B |
|---|---|
| Fig 5C | Fig 5D |

```
("assetType      "skillCode    ("assetType   "links     ("assetType  "timeS      ("assetType   "locati
    ":          ; ":  "UGREP")(    ":       ;":"JSO  )(    ":      ;tamp":)(    ":       ;on":"JS  )
  "Image"                        "Image"    Nobjec     "Image"   "ISO"      "Image"    ONobjec
                                              t"                                        t"

("descripti    "skillCode    ("descripti  "links     ("descripti "timeS      ("descripti  "locati
   on":        ; ":  "UGREP")(   on":      ;":"JSO  )(   on":     ;tamp":)(   on":      ;on":"JS  )
 "Patching"                   "Patching"   Nobjec    "Patching"  "ISO"     "Patching"   ONobjec
                                             t"                                          t"

("jobType":    "skillCode    ("jobType":  "links     ("jobType":  "timeS      ("jobType":  "locati
 "Repair"      ; ":  "UGREP")( "Repair"    ;":"JSO  )( "Repair"   ;tamp":)( "Repair"    ;on":"JS  )
                                           Nobjec                 "ISO"                   ONobjec
                                             t"                                            t"

("jobCatego                  ("jobCatego  "links     ("jobCatego  "timeS     ("jobCatego  "locati
  ry":         ; "skillCode    ry":        ;":"JSO  )(  ry":      ;tamp":)(  ry":      ;on":"JS  )
 "Broadband"   ; ":  "UGREP")( "Broadband  Nobjec    "Broadband" ;"ISO"     "Broadband"  ONobjec
    "                             "          t"          "                     "            t"

("domain":                   ("domain":   "links     ("domain":   "timeS     ("domain":   "locati
 "Colcheste    ; "skillCode   "Colcheste  ;":"JSO  )( "Colcheste  ;tamp":)( "Colcheste  ;on":"JS  )
  r and        ; ":  "UGREP")(  r and      Nobjec      r and     ;"ISO"      r and       ONobjec
 Ipswich"                      Ipswich"     t"        Ipswich"              Ipswich"       t"
```

| Fig 5A | Fig 5B |
|--------|--------|
| Fig 5C | Fig 5D |

*FIGURE 5C*

**FIGURE 5D**

| *Fig 5A* | *Fig 5B* |
|----------|----------|
| *Fig 5C* | *Fig 5D* |

( "skillCode ": "UGREP" ; "domain": "Colcheste r and Ipswich" ) ( "skillCode ": "UGREP" ; "links ":"JSO Nobjec t" ) ( "skillCode ": "UGREP" ;timeS tamp":) "ISO" ( "skillCode ": "UGREP" ; "locati on":"JS ONobjec t" )

( "links":"J SONobject" ; "domain": "Colcheste r and Ipswich" ) ( "links":"J SONobject" ; "skill Code": "UGREP " ) ( "links":"J SONobject" ; "timeS tamp":) "ISO" ( "links":"J SONobject" ; "locati on":"JS ONobjec t" )

( "timeStamp ": "ISO" ; "domain": "Colcheste r and Ipswich" ) ( "timeStamp ": "ISO" ; "skill Code": "UGREP " ) ( "timeStamp ": "ISO" ; "links ":"JSO Nobjec t" ) ( "timeStamp ": "ISO" ; "locati on":"JS ONobjec t" )

( "location" :"JSONobje ct" ; "domain": "Colcheste r and Ipswich" ) ( "location" :"JSONobje ct" ; "skill Code": "UGREP " ) ( "location" :"JSONobje ct" ; "links ":"JSO Nobjec t" ) ( "location" :"JSONobje ct" ; "timeSt amp": ) "ISO"

**FIGURE 6A**

| Fig 6A | Fig 6B | Fig 6C | Fig 6D |
|---|---|---|---|

FIGURE 6B

| Fig 6A | Fig 6B | Fig 6C | Fig 6D |
|--------|--------|--------|--------|

**FIGURE 6C**

**FIGURE 6D**

| Fig 6A | Fig 6B | Fig 6C | Fig 6D |

**FIGURE 7**

FIGURE 8

$y = f(x)$

## FIGURE 9

EP 3 624 065 A1

Europäisches
Patentamt

European
Patent Office

Office européen
des brevets

# EUROPEAN SEARCH REPORT

Application Number

EP 18 19 3909

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2017/055829 A1 (UNIV OF ESSEX ENTPR LTD [GB]) 6 April 2017 (2017-04-06) * abstract * * page 1, line 5 - page 1, line 18 * * page 4, line 1 - page 6, line 19 * * page 10, line 4 - page 11, line 4 * * page 11, line 28 - page 15, line 33 * * page 17, line 7 - page 19, line 5 * * page 21, line 6 - page 23, line 31 * * page 25, line 29 - page 28, line 13 * ----- | 1-8 | INV. G06T19/00 |
| A | PENA-RIOS ANASOL ET AL: "A Fuzzy Logic based system for Mixed Reality assistance of remote workforce", 2016 IEEE INTERNATIONAL CONFERENCE ON FUZZY SYSTEMS (FUZZ-IEEE), IEEE, 24 July 2016 (2016-07-24), pages 408-415, XP032998237, DOI: 10.1109/FUZZ-IEEE.2016.7737716 [retrieved on 2016-11-07] * abstract * * page 408, left-hand column, line 22 - page 409, right-hand column, line 45 * * page 414, right-hand column, line 7 - page 414, right-hand column, line 24 * ----- | 1-8 | TECHNICAL FIELDS SEARCHED (IPC) G06T |

The present search report has been drawn up for all claims

| Place of search | Date of completion of the search | Examiner |
|---|---|---|
| The Hague | 9 November 2018 | Boyadzhiev, Yavor |

EPO FORM 1503 03.82 (P04C01)

## ANNEX TO THE EUROPEAN SEARCH REPORT
## ON EUROPEAN PATENT APPLICATION NO.

EP 18 19 3909

This annex lists the patent family members relating to the patent documents cited in the above-mentioned European search report.
The members are as contained in the European Patent Office EDP file on
The European Patent Office is in no way liable for these particulars which are merely given for the purpose of information.

09-11-2018

| Patent document cited in search report | Publication date | Patent family member(s) | Publication date |
|---|---|---|---|
| WO 2017055829 A1 | 06-04-2017 | EP 3357053 A1<br>US 2018308377 A1<br>WO 2017055829 A1 | 08-08-2018<br>25-10-2018<br>06-04-2017 |

EPO FORM P0459

For more details about this annex : see Official Journal of the European Patent Office, No. 12/82

# EP 3 624 065 A1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **M. HINCAPIÉ ; A. CAPONIO ; H. RIOS ; E. GONZALEZ MENDÍVIL.** An introduction to Augmented Reality with applications in aeronautical maintenance. *13th International Conference on Transparent Optical Networks (ICTON),* 2011, 1-4

- **P. MILGRAM ; F. KISHINO.** A taxonomy of virtual reality displays. *IEICE TRANSACTIONS on Information and Systems,* 1994, vol. E77-D (12), 1321-1329
- **LIFTON, J. H.** Dual Reality: An Emerging Medium. Massachusetts Institute of Technology. *PhD Thesis,* 2007